# FASCICULE DE BREVET EUROPEEN

(11) **EP 1 979 363 B1**
(45) Date de publication et mention de la délivrance du brevet: **25.05.2011**
(21) Numéro de dépôt: 07704305.7
(22) Date de dépôt: 01.02.2007
(51) Int. Cl.: C07F 7/18, C07F 7/08, C07F 7/12, G01N 33/50

(54) **NOUVEAUX COMPOSÉS SILANES ET LEUR UTILISATION POUR FONCTIONNALISER DES SUPPORTS SOLIDES ET IMMOBILISER SUR CES SUPPORTS DES MOLÉCULES BIOLOGIQUES**
NEUE SILANVERBINDUNGEN UND DEREN VERWENDUNG ZUR FUNKTIONALISIERUNG FESTER MEDIEN UND ZUR IMMOBILISIERUNG BIOLOGISCHER MOLEKÜLE AUF DIESEN MEDIEN
NOVEL SILANE COMPOUNDS AND USE THEREOF IN ORDER TO FUNCTIONALISE SOLID MEDIA AND IMMOBILISE BIOLOGICAL MOLECULES ON SAID MEDIA

(30) Priorité: 01.02.2006 FR 0650361
(43) Date de publication de la demande: 15.10.2008
(73) Titulaire: Commissariat à l'Énergie Atomique et aux Énergies Alternatives, 75015 Paris (FR)
(72) Inventeur: MARTIN, Franck, F-34070 Montpellier (FR)
(74) Mandataire: Ilgart, Jean-Christophe
(86) Numéro de dépôt international: PCT/EP2007/050984
(87) Numéro de publication internationale: WO 2007/088187

(56) Documents cités:
- WO-A-02/051856

## Description

### DOMAINE TECHNIQUE

La présente invention a trait à de nouveaux composés silanes utilisables pour fonctionnaliser des supports solides, à des supports fonctionnalisés par lesdits composés silanes et à leurs utilisations pour l'immobilisation de molécules biologiques, telles que des acides nucléiques, des polypeptides, des lipides, des carbohydrates et des hormones.

Les supports porteurs de molécules biologiques immobilisées sont avantageusement utilisés pour la détection et la reconnaissance d'espèces biologiques, mais également d'autres applications, telles que la séparation et la purification de molécules biologiques.

Pour ce faire, il est essentiel de disposer de supports solides fonctionnalisés présentant les caractéristiques suivantes :
- permettre l'immobilisation reproductible des molécules biologiques d'intérêt ;
- permettre l'immobilisation des molécules biologiques d'intérêt de façon sensible, la sensibilité d'un support solide fonctionnalisé dépendant du taux d'immobilisation et de la méthode de détection d'un signal mais aussi du niveau du bruit de fond ;
- être réutilisables.

L'immobilisation de molécules biologiques d'intérêt sur des supports solides s'effectue généralement en deux étapes :
- une première étape de fonctionnalisation des supports qui consiste en une modification chimique de leur surface par greffage d'agents de couplage qui vont assurer la fixation des molécules biologiques sur le support ;
- une deuxième étape d'immobilisation consistant à établir une interaction entre les molécules biologiques et les agents de couplage greffés sur le support, l'interaction pouvant consister en la formation d'une liaison covalente entre la molécule biologique et l'agent de couplage ou de liaisons plus faibles (telles que des interactions électrostatiques, des liaisons datives).

Les agents de couplage se greffent à la surface des supports par réaction avec des fonctions -OH ou hydrure du support et des fonctions réactives de l'agent, pour former de fortes interactions ioniques ou covalentes entre l'agent de couplage et le support et s'organisent à la surface du support généralement sous forme d'une monocouche dense et organisée à la surface, par exemple, par formation de liaisons du type Van der Waals entre les molécules d'agents de couplage greffées.

Des agents de couplage pour fonctionnaliser des supports, en particulier des supports à base de silicium sont des organosilanes, comprenant au moins un groupe organique R apte à réagir avec une extrémité fonctionnelle des molécules à immobiliser et au moins un groupe X apte à réagir avec les fonctions -OH ou hydrure du support pour former une liaison iono-covalente voire covalente.

WO 02/051856 décrit un support solide constitué par un substrat comportant des sites destinés à l'immobilisation de sondes oligonucléotidiques ou de protéines ou de cellules biologiques munies de ligands, les sites étant pourvus d'espèces chimiques accrochées au substrat par une fonction chimique d'accrochage, caractérisé en ce que les espèces chimiques présentent un groupe diol lié au support par une chaîne alkyle, ce groupe diol étant destiné à être transformé en un groupe aldéhyde en vue de ladite immobilisation.

Les inventeurs se sont fixé comme but de proposer de nouveaux composés silanes aptes à être greffés à la surface d'un support solide et comprenant des groupes permettant l'immobilisation de molécules biologiques, soit par formation de liaisons covalentes, soit par formation d'interactions de plus faible énergie que la liaison covalente (interactions électrostatiques, complexation...)

### EXPOSE DE L'INVENTION

Ainsi, l'invention a trait, selon un premier objet, à un composé silane répondant à l'une des formules suivantes :

A-E-X (I)

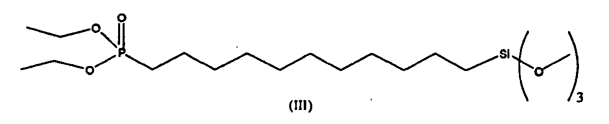

A, E et X dans la formule (I) répondant aux définitions suivantes :
- X représente un groupe silylé apte à créer une liaison covalente après réaction avec les fonctions hydroxyle ou hydrure d'un support,
   lequel X représente un groupe trihalogénosilane ; un groupe trihydrogénosilane ; un groupe trialcoxysilane -Si(OR)₃ avec R représentant un groupe alkyle saturé en C₁ à C₆, linéaire ou ramifié, un groupe phényle : un groupe triaminoalcoxyamine -Si (NR¹R²) ₃, avec les R¹ et R² représentant indépendamment un groupe alkyle saturé en C₁ à C₆, linéaire ou ramifié, un groupe phényle, un groupe organométallique ;
- E représente un groupe espaceur organique ;
- A représente un groupe choisi parmi les groupes de formules suivantes : 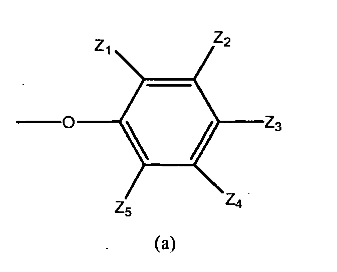 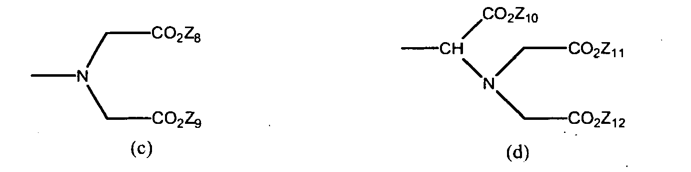 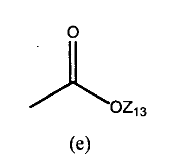
dans lesquelles :
- Z₁ à Z₅ représentent indépendamment un atome d'hydrogène ou un atome d'halogène ;
- Z₈ à Z₁₂ représentent indépendamment un groupe protecteur de la fonction acide carboxylique, un atome d'hydrogène ou un cation monovalent ;
- Z₁₃ représente un groupe imidazole, N-hydroxysuccinimide, nitrophényl, pentafluorophényl ou anhydride d'acide,
à l'exclusion du phényloxyundécyltriméthoxysilane et des composés de formules suivantes :

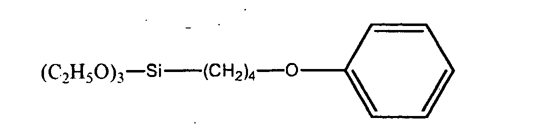

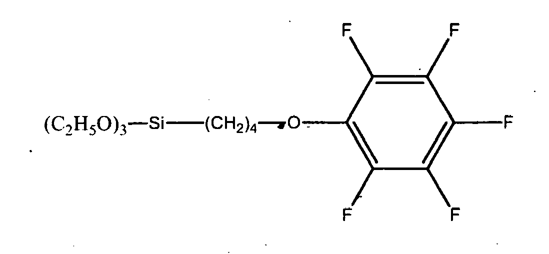

Selon l'invention, le groupe E est un groupe espaceur organique, sa fonction essentielle étant de conférer des propriétés particulières au film résultant du greffage des composés silanes à la surface d'un support.

Ce groupe E est généralement un groupe hydrocarboné, comprenant, par exemple, de 2 à 24 atomes de carbone, et comprenant éventuellement une ou plusieurs insaturations et/ou un ou plusieurs groupes aromatiques et/ou un ou plusieurs hétéroatomes.

A titres d'exemples, le groupe E peut être un groupe alkylène, c'est-à-dire un enchaînement du type -CH₂-, comprenant, par exemple, de 8 à 24 atomes de carbone. Ce type de groupe confère aux composés silanes, une fois greffés sur un support, une capacité à interagir entre eux, par création d'interactions interchaînes et ainsi contribue à l'obtention de monocouches organisées.

Le groupe E peut être un groupe fluoroalkylène comprenant de 3 à 24 atomes de carbone. Ces groupes contribuent à conférer au film résultant du greffage des composés silanes les comprenant, des propriétés permettant leur utilisation en chromatographie et en électrophorèse.

Le groupe E peut être un groupe hydrocarboné comprenant une ou plusieurs insaturations, par exemple, du type acétylénique. Un exemple d'un tel groupe peut être un groupe alkylène tel que défini ci-dessus interrompu par une ou plusieurs insaturations acétyléniques. Lorsque le groupe E comporte au moins deux insaturations, il peut conférer aux composés silanes, une fois greffés sur un support, une capacité à se réticuler.

Le groupe E peut être également un groupe hydrocarboné comprenant un ou plusieurs groupes aromatiques.

On peut citer, par exemple, un groupe comprenant des groupes aromatiques conjugués avec des groupes linéaires insaturés, tel qu'un groupe résultant de l'enchaînement d'un motif phénylène-vinylène ou phénylène-acétylène. Ces groupes contribuent à conférer au film résultant du greffage des composés silanes les comprenant, des propriétés optiques non linéaires.

On peut citer, par exemple, un groupe comprenant des motifs pyrrole, thiophène. Ces groupes contribuent à conférer au film résultant du greffage des composés silanes les comprenant, des propriétés de conduction électronique.

On peut citer, par exemple, un groupe comprenant un ou plusieurs aromatiques substitués par un ou plusieurs groupes hétéroatomiques, tel qu'un groupe comprenant un enchaînement de motifs quinones ou de motifs diazoïques. Ces groupes contribuent à conférer au film résultant du greffage des composés silanes les comprenant, des propriétés de photo/électroluminescence.

Selon l'invention, X représente un groupe silylé permettant la fixation covalente du composé silane sur les fonctions hydroxyle ou hydrure d'un support, lequel support peut être, par exemple, un support solide en silicium, en ITO (oxyde d'indium et d'étain) ou en titane.

Ce groupe X peut être un groupe trihalogénosilane (tel qu'un groupe trifluorosilane, un groupe trichlorosilane) ; un groupe trihydrogénosilane ; un groupe trialcoxysilane -Si(OR)₃ avec R représentant un groupe alkyle saturé en C₁ à C₆, linéaire ou ramifié, un groupé phényle (tel qu'un groupe triméthoxysilane, un groupe triéthoxysilane, un groupe triisopropoxysilane) ; un groupe triaminoalcoxyamine -Si(NR¹R²)₃, avec les R¹ et R² représentant indépendamment un groupe alkyle saturé en C₁ à C₆, linéaire ou ramifié, un groupe phényle ; un groupe organométallique (tel qu'un groupe organomagnésien, un groupe organolithien) ; un groupe hydrolysable.

Les groupes Z₈ à Z₁₂ représentant un groupe protecteur de la fonction acide carboxylique peuvent être choisis parmi les groupes décrits dans Protective Groups in organic synthesis (T.W. Greene et al., 2nd Edition, Wiley Interscience) tels que, par exemple, un radical alkyle en C₁-C₄ ou un radical cyclique (tel qu'un groupe phényle).

Parmi les radicaux alkyle en C₁-C₄, on peut notamment citer les radicaux méthyle, éthyle, isopropyle, tertiobutyle, le groupe tertiobutyle étant particulièrement préféré.

Des composés particuliers conformes à l'invention répondent aux formules (II), (III), (IV), (V), (VI) et (VII) suivantes :

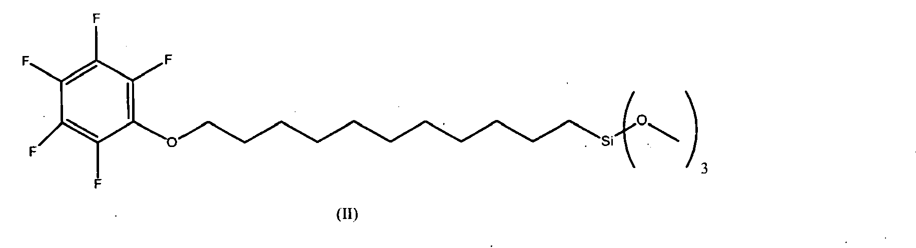

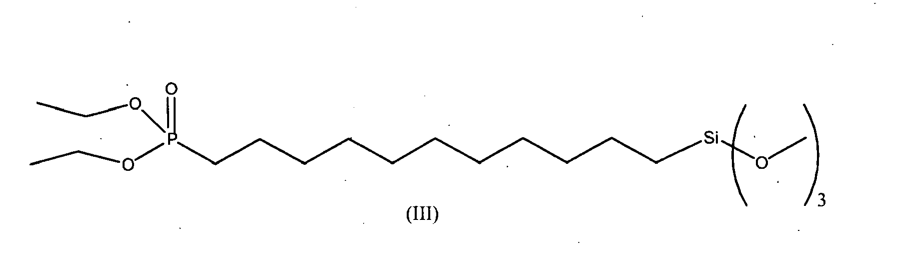

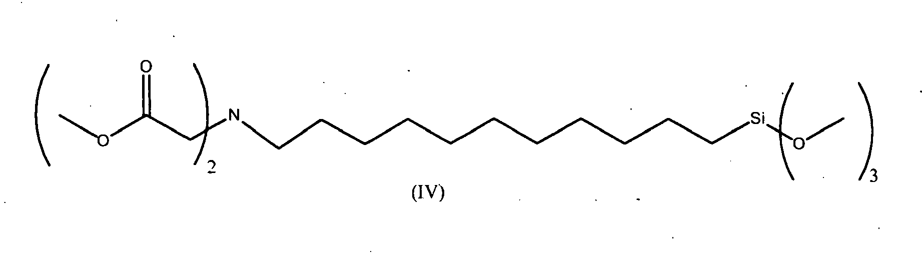

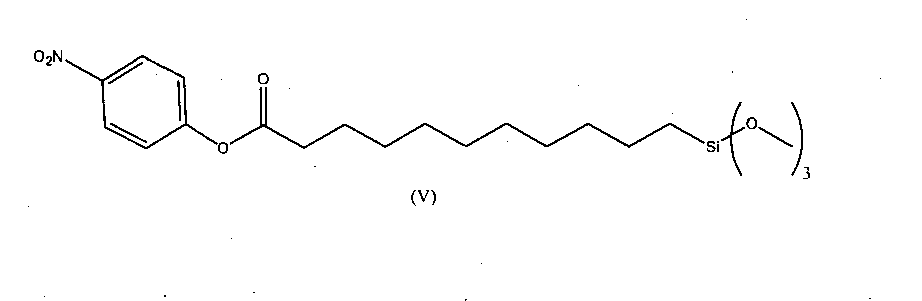

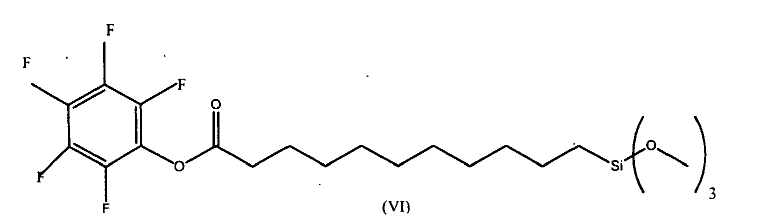

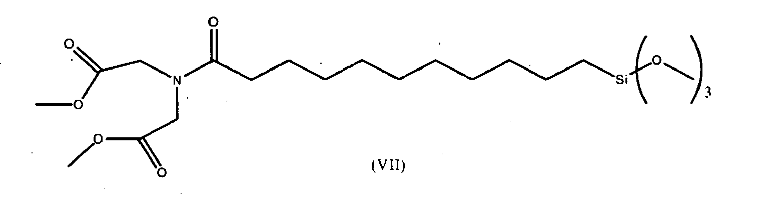

Les composés de l'invention peuvent être préparés par des méthodes classiques de synthèse accessibles à un technicien spécialisé en synthèse organique.

A titre d'exemple, pour obtenir des composés porteurs à une de leurs extrémités d'un groupe (a),(c),(d) et à l'autre extrémité d'un groupe X du type trialcoxysilane, la préparation peut s'envisager en deux étapes, en partant d'un composé précurseur porteur à une de ses extrémités d'un atome d'halogène et à l'autre extrémité d'un groupe vinylique, selon le schéma réactionnel suivant :
1) Formation du groupe A à partir du composé précurseur

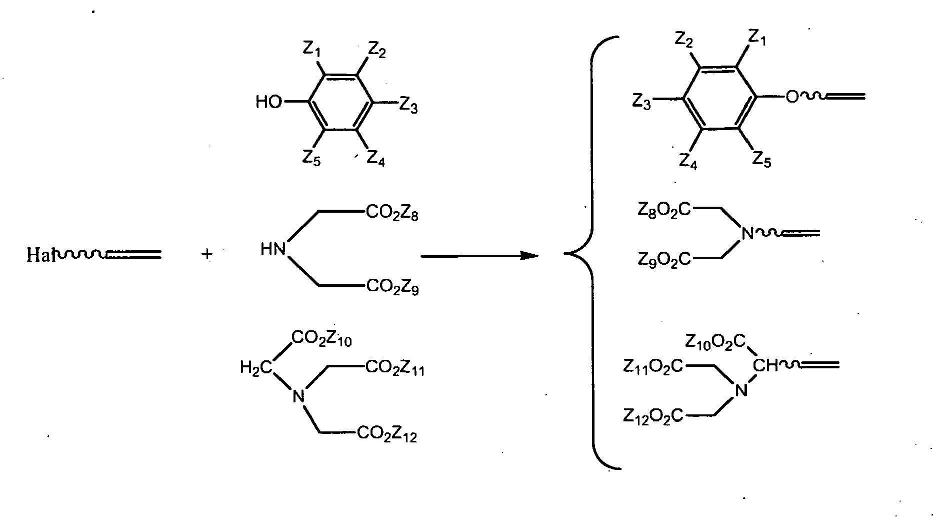

Cette réaction consiste en une substitution nucléophile de l'atome d'halogène Hal.
2) Les composés obtenus à l'issue de l'étape 1 sont ensuite soumis à une réaction d'hydrosilylation avec un réactif du type HSi(OR)₃ en présence d'un catalyseur de Karstedt Pt[Si(CH₃)₂HC=CH₂]₂O.

Pour obtenir le groupe E (e), il suffit de remplacer le composé précurseur mentionné ci-dessus par un composé comportant à une de ses extrémités un groupe -COHal au lieu d'un groupe -Hal et de faire réagir sur ce composé un réactif de formule HO-Z₁₃, la deuxième étape étant identique à celle mentionnée ci-dessus.

L'homme du métier adaptera ces schémas réactionnels en fonction des composés silanes qu'il souhaite obtenir.

Comme mentionné précédemment, les composés silanes de l'invention sont susceptibles de se greffer à la surface d'un support, en raison de la présence du groupe X apte à réagir avec des fonctions hydroxyles ou hydrures (présentes sur le support) pour former des liaisons covalentes.

Ainsi, l'invention a trait selon un second objet, à un procédé de fonctionnalisation d'un support solide comportant en surface des fonctions hydroxyle ou hydrure, comprenant une étape de mise en contact d'une solution comprenant au moins un composé silane avec ledit support, ledit composé silane répondant à l'une des formules suivantes :

A-E-X (I)

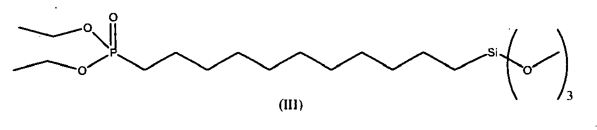

A, E et X dans la formule (I) répondant aux définitions suivantes :
- X représente un groupe silylé apte à créer une liaison covalente après réaction avec les fonctions hydroxyle ou hydrure d'un support,
   lequel X représente un groupe trihalogénosilane ; un groupe trihydrogénosilane ; un groupe trialcoxysilane -Si(OR)₃ avec R représentant un groupe alkyle saturé en C₁ à C₆, linéaire ou ramifié, un groupe phényle : un groupe triaminoalcoxyamine -Si (NR¹R²) ₃, avec les R¹ et R² représentant indépendamment un groupe alkyle saturé en C₁ à C₆, linéaire ou ramifié, un groupe phényle, un groupe organométallique ;
- E représente un groupe espaceur organique ;
- A représente un groupe choisi parmi les groupes de formules suivantes : 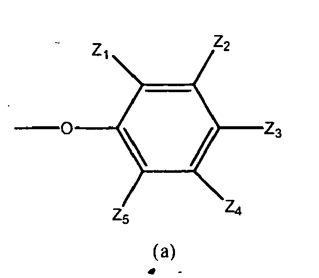 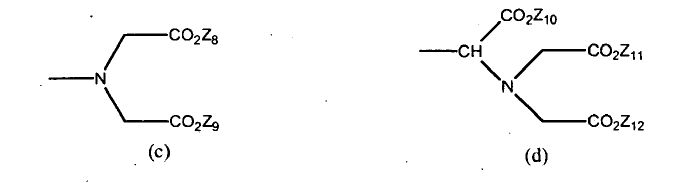 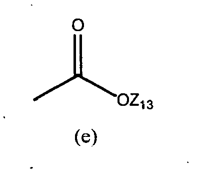
dans lesquelles :
- Z₁ à Z₅ représentent indépendamment un atome d'hydrogène ou un atome d'halogène ;
- Z₈ à Z₁₂ représentent indépendamment un groupe protecteur de la fonction acide carboxylique, un atome d'hydrogène ou un cation monovalent ;
- Z₁₃ représente un groupe imidazole, N-hydroxysuccinimide, nitrophényl, pentafluorophényl ou anhydride d'acide,
à l'exclusion du phényloxyundécyltriméthoxysilane.

Des composés (II) à (VII) sont particulièrement appropriés pour la mise en oeuvre de ce procédé.

X et E peuvent être tels que définis précédemment dans la partie relative aux composés silanes.

Ce procédé peut comprendre préalablement un étape de traitement de la surface du support afin de créer sur ladite surface les fonctions hydroxyles ou hydrures nécessaires au greffage.

Ainsi, pour un support en silicium 100 (par exemple, du type wafer), il est préférable, avant fonctionnalisation, de traiter celui-ci en le mettant en contact avec une solution de soude afin d'engendrer une réaction d'hydroxylation.

Les supports pouvant être fonctionnalisés selon le procédé de l'invention peuvent être des supports organiques (par exemple en matériaux plastiques), des supports inorganiques, par exemple des supports en oxyde métallique (par exemple, silice et ses dérivés comme le verre, le quartz, oxyde d'indium et d'étain...), des supports métalliques (tels que des supports en titane) ou des supports en silicium, l'essentiel étant que ces supports soient susceptibles (éventuellement avec l'étape de traitement préalable mentionnée ci-dessus) de présenter des fonctions hydroxyles ou hydrures pour le greffage des composés silanes de l'invention.

L'invention a également pour objet le support solide fonctionnalisé susceptible d'être obtenu par le procédé de l'invention.

De part la nature du groupe A, les composés silanes greffés ont la capacité d'interagir avec des molécules biologiques pour les immobiliser.

La présente invention a donc également pour objet un procédé d'immobilisation de molécules biologiques sur support solide fonctionnalisé comprenant les étapes suivantes :
a) une étape de mise en oeuvre d'un procédé de fonctionnalisation d'un support solide comportant en surface des fonctions hydroxyle ou hydrure, comprenant une étape de mise en contact d'une solution comprenant au moins un composé silane avec ledit support, ledit composé silane répondant à l'une des formules suivantes :

   A-E-X (I)

   dans laquelle :
   - X représente un groupe silylé apte à créer une liaison covalente après réaction avec les fonctions hydroxyle ou hydrure d'un support,
      lequel X représente un groupe trihalogénosilane ; un groupe trihydrogénosilane ; un groupe trialcoxysilane -Si(OR)₃ avec R représentant un groupe alkyle saturé en C₁ à C₆, linéaire ou ramifié, un groupe phényle : un groupe triaminoalcoxyamine -Si (NR¹R²) ₃, avec les R¹ et R² représentant indépendamment un groupe alkyle saturé en C₁ à C₆, linéaire ou ramifié, un groupe phényle, un groupe organométallique ;
   - E représente un groupe espaceur organique ;
   - A représente un groupe choisi parmi les groupes de formules suivantes : 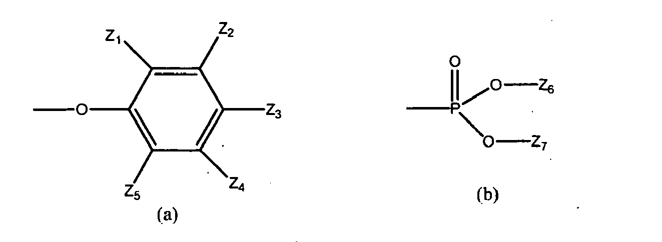 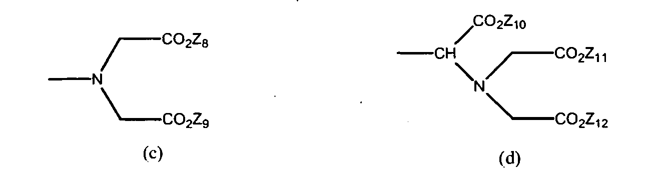 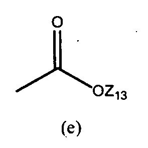
   dans lesquelles :
   - Z₁ à Z₅ représentent indépendamment un atome d'hydrogène ou un atome d'halogène ;
   - Z₆ et Z₇ représentent un groupe protecteur de la fonction acide phosphonique, un atome d'hydrogène ou un cation monovalent ;
   - Z₈ à Z₁₂ représentent indépendamment un groupe protecteur de la fonction acide carboxylique, un atome d'hydrogène ou un cation monovalent ;
   - Z₁₃ représente un groupe imidazole, N-hydroxysuccinimide, nitrophényl, pentafluorophényl, anhydride d'acide,
   à l'exclusion du phényloxyundécyltriméthoxysilane ;
b) une étape de mise en contact du support obtenu à l'étape a) avec une solution comprenant la (les) molécule(s) biologique(s) à immobiliser.

Les groupes Z₆ et Z₇ représentant un groupe protecteur de la fonction acide phosphonique peuvent être choisis parmi les groupes tels que, par exemple, un radical alkyle en C₁-C₄, un radical cyclique aromatique (tel qu'un groupe phényle), un radical silylé (tel qu'un groupe -Si(CH₃)₃) et un groupe aminé.

Parmi les radicaux alkyle en C₁-C₄, on peut citer notamment les radicaux méthyle, éthyle.

Les composés de formules (II) à (VII) sont particulièrement appropriés pour la mise en oeuvre de ce procédé.

X et E peuvent être tels que définis précédemment dans la partie descriptive des composés silanes.

Les molécules , à immobiliser peuvent être des oligonucléotides, des acides nucléiques, des polypeptides (protéines, enzymes), des lipides, des carbohydrates ou des hormones.

Au sens de la présente invention et dans ce qui suit, on entend par « acides nucléiques » aussi bien des oligonucléotides que des ADN ou des ARN, ou encore des acides nucléiques au squelette ou aux bases modifiées, tels que les acides nucléiques peptidiques (correspondant à l'acronyme PNA pour « Peptide Nucleic Acids ») qui font intervenir des liaisons peptidiques à la place des liaisons phosphodiesters.

Selon la nature de la molécule biologique à isoler et la nature du composé silane greffé, l'immobilisation peut se faire selon différents mécanismes, tels que l'immobilisation par formation de liaisons π-π, par interactions ioniques ou encore par complexation avec des ions métalliques.

Ainsi, avec des supports fonctionnalisés avec des composés silanes comprenant un groupe A de formule : 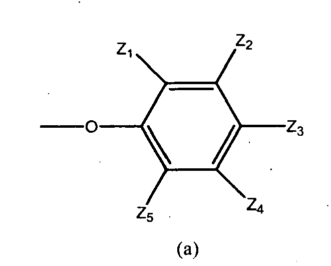 il se forme à la surface des supports fonctionnalisés, lorsque Z₁ à Z₅ représentent des atomes d'halogène, des liaisons π-π entre les cycles aromatiques des molécules de composés silanes adjacentes. Les molécules biologiques comprenant des cycles aromatiques peuvent se trouver piégées aisément par les complexes résultant de la formation desdites liaisons π-π, telles que les molécules biologiques comprenant des acides aminés aromatiques (phénylalanine, tryptophane, tyrosine).

La formation de ces liaisons π-π s'explique par la forte électronégativité des atomes d'halogène, qui engendre une délocalisation de charges dans la molécule du composé silane, augmentant ainsi un effet donneur-accepteur et favorisant de façon significative la formation d'une liaison π-π entre deux molécules adjacentes.

Avec des supports fonctionnalisés avec des composés silanes comprenant un groupe A de formule : 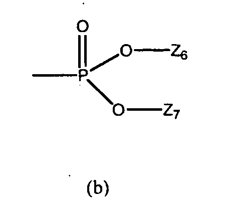 l'immobilisation se fait par interaction ionique, sous réserve de libérer la fonction acide phosphonique (par exemple par traitement avec du iodotriméthylsilane), laquelle fonction va à son tour réagir avec une solution aqueuse de soude pour donner la fonction phosphonate, laquelle fonction phosphonate est apte à créer des interactions ioniques avec des molécules biologiques chargées (par exemple, des protéines), tels que cela est souvent le cas à des pH physiologiques.

Avec des supports fonctionnalisés avec des composés silanes comprenant un groupe A de formule : 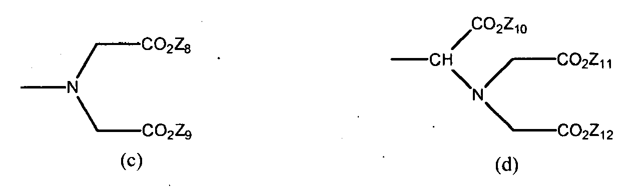 l'immobilisation des molécules biologiques peut se faire par complexation, sous réserve de libérer la fonction acide iminodiacétique, par exemple, par hydrolyse acide, puis de traiter le support avec une solution contenant un élément métallique (tel que Ni²⁺, Zn²⁺, Co²⁺, Cu²⁺, Ga³⁺) pour permettre la complexation de cet élément, lequel élément pourra voir sa sphère de coordination complétée par des doublets libres de la molécule biologique à immobiliser. C'est le cas notamment des protéines portant une séquence Histidine-Tag. La fonction histidine est apte à se chélater avec le site de coordination libre d'un ion métallique lui-même chélaté à un groupement acide iminodiacétique ou acide nitrilodiacétique. Les composés silanes conformes à l'invention comportant de tels groupements peuvent être donc être utilisés pour la séparation et la purification de protéines comprenant une telle séquence.

Pour certains silanes (ceux comportant des groupes A de formules (b), (c) et (d)), le procédé de l'invention peut comporter avant l'étape de mise en contact avec la molécule à immobiliser, une étape de déprotection afin de libérer les fonctions acide phosphonique et acide carboxyliques et pour ceux comportant un groupe A de formule (c) ou (d), une étape subséquente de complexation avec un élément métallique, c'est-à-dire après l'étape de déprotection.

Les composés silanes comprenant un groupe A de formule : 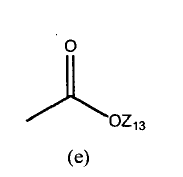 avec Z₁₃ représentant un groupe imidazole, N-hydroxysuccinimide, nitrophényl, pentafluorophényl, sont des composés silane-esters activés, dans la mesure où ils vont permettre un couplage direct entre leur fonction ester et. une fonction amine présente sur une molécule biologique. Ces composés silanes une fois greffés sur un support vont donc pouvoir être avantageusement utilisés pour immobiliser des molécules biologiques porteuses de fonctions amine telles que des protéines ou encore des oligonucléotides.

L'invention a également pour objet les supports solides obtenus en mettant en oeuvre le procédé d'immobilisation conforme à l'invention, c'èst-à-dire les supports solides sur lesquels' sont immobilisés par fixation covalente les molécules biologiques d'intérêt.

Ces supports solides peuvent ainsi être utilisés comme outils d'analyse (par exemple, pour un diagnostic, un séquençage) ou comme outils de synthèse pour réaliser par exemple des revêtements.

Les supports trouvent donc des applications dans de nombreux domaines, tels que la synthèse sur supports solides, la séparation et la purification de molécules (électrophorèse et chromatographie), les biocapteurs.

L'utilisation de supports solides fonctionnalisés selon la présente invention permet d'immobiliser différents types de molécules biologiques et donc de préparer différents types de puces comme des puces à acides nucléiques telles que des puces à ADN, des puces à polypeptides telles que des puces à protéines.

L'utilisation de supports solides modifiés selon la présente invention est particulièrement avantageuse pour la préparation de puces à ADN, à savoir de supports sur lesquels sont fixés, de façon covalente, des oligo- ou polynucléotides de séquences connues. De telles puces à ADN permettent, par hybridation des oligo- ou polynucléotides immobilisés sur le support avec des acides nucléiques ou des oligonucléotides cibles, de déterminer la séquence de ces molécules cibles et de suivre l'expression des gènes.

La présente invention a donc pour objet également une puce à acides nucléiques ou à polypeptides, obtenues par le procédé d'immobilisation de l'invention mentionné ci-dessus.

L'invention va maintenant être décrite en référence aux exemples suivants donnés à titre illustratif et non limitatif.

### EXPOSE DE MODES DE REALISATION PARTICULIERS

### EXEMPLE 1

Cet exemple illustre la préparation d'un composé silane conforme à l'invention : le 11-pentafluorophénylétherundécyltriméthoxysilane selon le schéma réactionnel suivant :

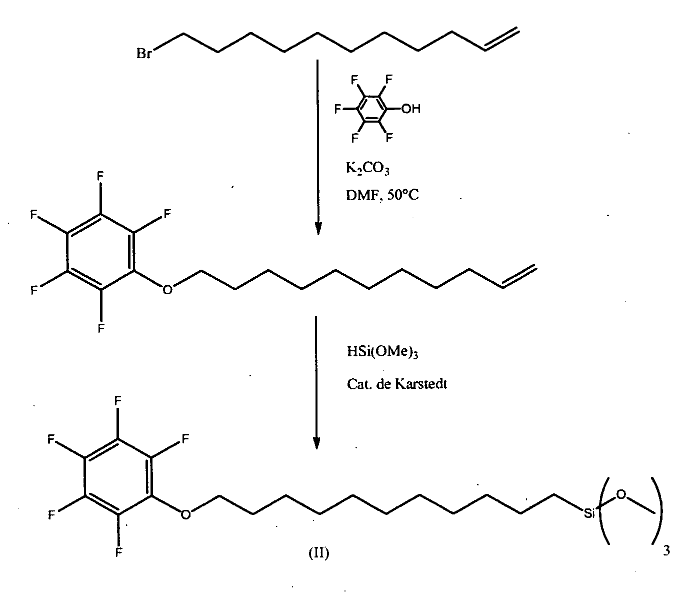

La fonction pentafluorophényléther est obtenue par réaction du 11-bromoundécène avec le pentafluorophénol en présence de carbonate de potassium. Ensuite, l'incorporation du groupement silylé s'effectue par une réaction d'hydrosilylation en présence d'un catalyseur de Karstedt.

Cet exemple illustre également la silanisation d'un support en silicium par le composé silane (II)

### a) Etape 1 : Synthèse du 11-pentafluorophénylétherundéc-1-ène

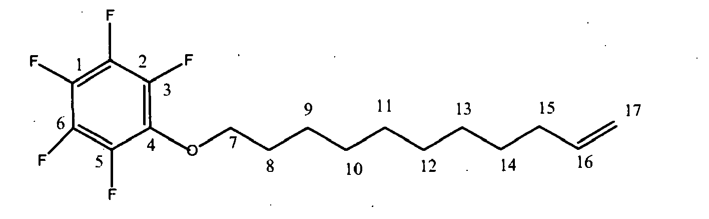

A une solution de pentafluorophénol (3,77g; 21 mmol; 1 éq.) dissous dans 75 mL de DMF, sont additionnés du 11-bromoundécène (95%) (5,02g; 4,7 mL; 21 mmol) et du carbonate de potassium (2,83g; 21 mmol; 1 éq.). La réaction s'effectue à reflux durant 3 heures. Après évaporation du DMF et reprise au dichlorométhane, le mélange réactionnel est lavé successivement avec de l'eau permutée (à deux reprises) et avec une solution saturée de chlorure de sodium, séché sur du sulfate de magnésium anhydre puis concentré pour donner un liquide incolore.

Les caractéristiques du produit obtenu sont les suivantes :
Masse obtenue: 5,79 g
Rendement : 84%
**RMN ¹H (200 MHz; CDCl₃)** : 1,35 (12H; m; H⁹⁻¹⁴); 1,79 (2H; m; H⁸); 2,08 (2H; m; H¹⁵); 4,19 (2H; t; H⁷; ³J_{H-H}=6,5 Hz) ; 5 (2H; m; H¹⁷) ; 5,86 (1H; m; H¹⁶)
**RMN ¹³C (200 MHz; CDCl₃)** : 25, 16; 29,23; 29,28; 29,42; 29,49; 29,63; 33,72; 34,18; 76,16 (t; C^{7; 3}J_{C-C}= 3,4 Hz); 114, 55 (C¹⁷); 134,46 (C⁴); 138,22 (2c; C³⁺⁵; ³J_{C-F}= 259 Hz); 139,51 (C¹⁶) ; 139, 75 (C¹) ; 142, 38 (2c; C^{2+6; 3}J_{C-F}= 243 Hz).

### b) Etape 2 : Synthèse du 11-pentafluorophénylétherundécyltriméthoxysilane (II)

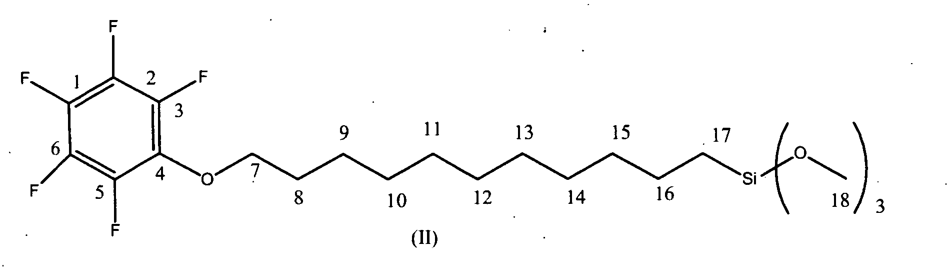

Le pentafluorophénylétherundéc-1-ène (5,79g; 17 mmol) est mélangé avec du triméthoxysilane (90%) (3g; 3,1 mL; 22 mmol; 1,3 éq.). Le catalyseur de Karstedt (0,04g; 0,04 mmol; 0,0025 éq.) est additionné très lentement. La réaction se déroule à température ambiante durant 12 heures. Le brut réactionnel est purifié par distillation pour donner un liquide incolore.

Les caractéristiques du produit obtenu sont les suivantes :
Masse obtenue : 5,69 g
Point d'ébullition: 130-135°C à 0,5 mbar
Rendement : 72%
**RMN ¹H (200 MHz; CDCl₃)** : 0,64 (2H; m; H¹⁷); 1,27 (16H; m; H⁹⁻¹⁶) ; 1,75 (2H; m; H⁸); 3,56 (9H; s; H¹⁸) ; 4,13 (2H; t; H⁷; ³J_{H-H}= 6,5 Hz)
**RMN ¹³C (200 MHz; CDCl₃)** : 9,45 (C¹⁷); 22,94; 25,85; 29,57; 29,6; 29,83 (2C); 29,89; 30,17; 33,48; 50,67 (3C; C¹⁸); 76, 16 (t; C⁷ ; ³J_{C-C}= 3,4 Hz) ; 134,46 (C⁴); 138,22 (2C; C³⁺⁵; ³J_{C-F}= 259 Hz) ; 139,51 (C¹⁶) ; 142,38 (2C; C^{2+6; 3}J_{C-F}= 243 Hz)
**RMN Si (200 MHz; CDCl₃)** :-41,29 (s)

### c) Silanisation d'un support en silicium par le composé(II)

Préalablement, le support en silicium, recouvert d'une couche d'oxyde thermique de 5000 Å d'épaisseur, est soumis à une hydroxylation par mise en contact avec une solution de soude 3,5 M pendant deux heures.

Une solution comprenant le composé silane préparé ci-dessus à une concentration de 10⁻²M dans du trichloroéthylène anhydre est utilisée, et les réactions de silanisation sont effectuées à une température contrôlée de 2°C pendant 24 heures.

Le support greffé se présente sous la configuration suivante :

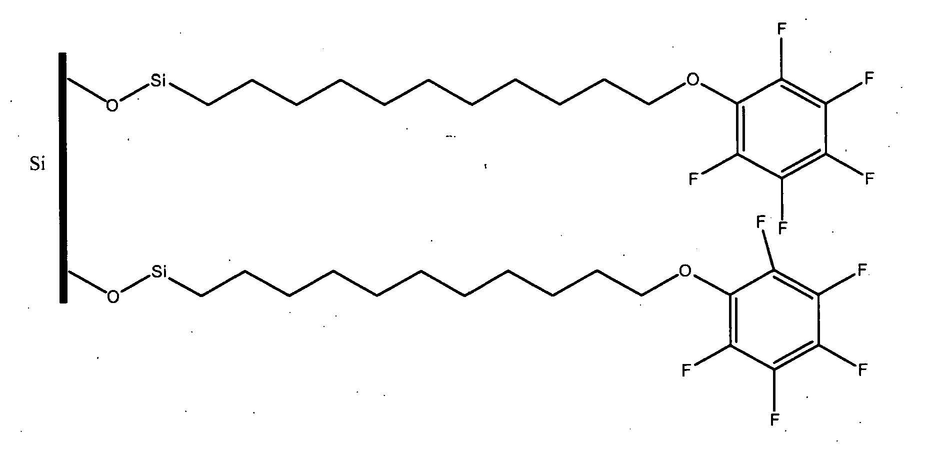

### EXEMPLE 2

Cet exemple illustre la préparation d'un composé silane conforme à l'invention : le 11-(diéthylphosphonate)undécyltriméthoxysilane (III) selon le schéma réactionnel suivant :

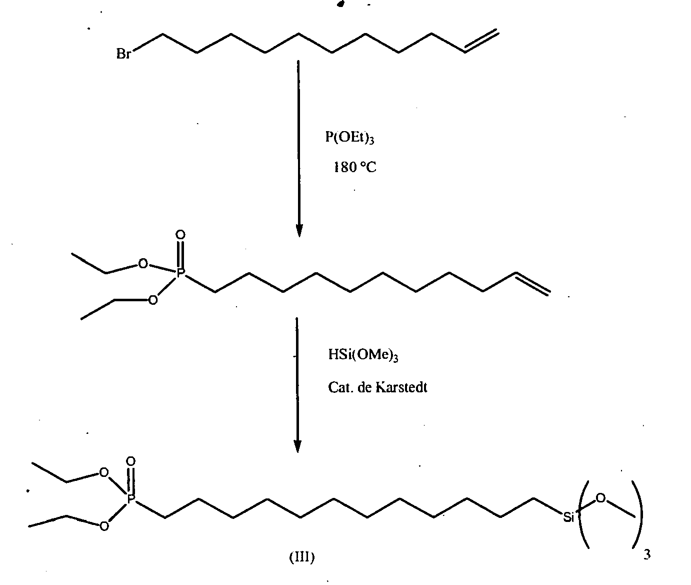

La fonction acide phosphonique est protégée sous la forme diéthylphosphonate après réaction du 11-bromoundécène avec du triéthylphosphate à chaud.

Ensuite, l'incorporation du groupement silylé s'effectue par une réaction d'hydrosilylation en présence d'un catalyseur de Karstedt.

Cet exemple illustre également la silanisation d'un support en silicium par le composé silane (III).

### a) Etape 1 : Synthèse du 11-(Diéthylphosphonate)undéc-1-ène

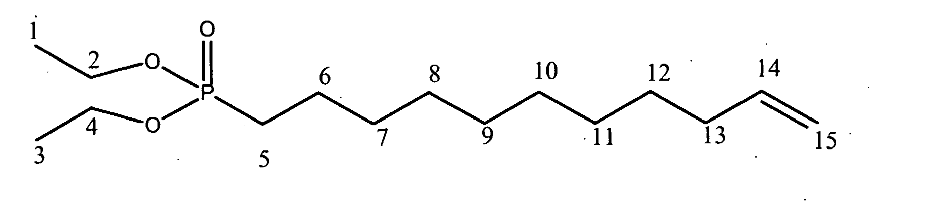

Le 11-bromoundécène (95%) (12,64g; 11,8mL; 52 mmol) est mélangé avec du triéthylphosphate (98%) (17,24g; 17,8 mL; 102 mmol; 2éq.). La solution est chauffée à 170°C durant 24 heures puis le brut réactionnel est purifié par distillation pour donner un liquide incolore.

Les caractéristiques du produit obtenu sont les suivantes :
Masse obtenue : 13,55g
Point d'ébullition : 115-120°C à 0,5 mbar
Rendement : 91 %
**RMN ¹H (200 MHz; CDCl₃)** : 1,29 (12H; m; H⁷⁻¹²); 1,32 (6H; t; H¹⁺³; ³J_{H-H}=7,1 Hz); 1,51-1,94 (4H; m; H⁵⁺⁶) ; 2,04 (2H; m; H¹³) ; 4,09 (4H; m; H²⁺⁴); 4,97 (2H; m; H¹⁵) ; 5,81 (1H; m; H¹⁴)
**RMN ¹³C (200 MHz; CDCl₃)** : 16,75 (2C; d; C¹⁺³; ³J_{C-P}=6,2 Hz); 21,25; 22,69 (d; C⁷; ³J_{C-P}=5,4Hz) ; 24,58-27,37 (d; C⁵; ¹J_{C-P}=140,3Hz); 29,20; 29,37; 29,60; 29,69; 30,88 (d; C⁶; ²J_{C-P}= 16,9 Hz); 34,09; 61,60 (2C; d; C²⁺⁴; ²J_{C-p}=5, 9Hz) ; 114, 43 (C¹⁵) ; 139,35 (C¹⁴).

### b) Etape 2 : Synthèse du 11-(diéthylphosphate)undécyltrilméthoxysilane(III)

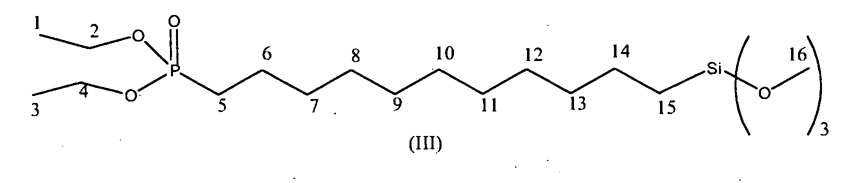

Le 11-(diéthylphosphonate)undéc-lène (4,99g; 17 mmol) est mélangé avec du triméthoxysilane (90%) (3,3g; 3,3mL; 23 mmol; 1,3 éq.). Le catalyseur de Karstedt (0,04g; 0,04 mmol; 0,0025 éq.) est additionné très lentement. La réaction se déroule à température ambiante durant 16 heures. Le brut réactionnel est purifié par distillation pour donner un liquide incolore

Les caractéristiques du produit obtenu sont les suivantes :
Masse obtenue : 4,22 g
Point d'ébullition : 165-170°C à 0,5 mbar
Rendement : 60 %
**RMN ¹H (200 MHz; CDCl₃)** : 0,65 (2H; m; H¹⁵) ; 1,26 (16H; m; H⁷⁻¹⁴); 1,32 (6H; t; H¹⁺³; ³J_{H-H}=7Hz) ; 1,53-1,81 (4H; m; H⁵⁺⁶); 3,56 (9H; s; H¹⁶) ; 4,09 (4H; m; H²⁺⁴)
**RMN ¹³C (200 MHz; CDCl₃)** : 9,52 (C¹⁵) ; 16,87 (2C; d; C¹⁺³; ³J_{C-P}=6,1 Hz) ; 22, 74; 22,91 (d; C⁷; 3J_{C-P}=6,1Hz) ; 24,69-27,47 (d; C⁵; ¹J_{C-P}=140,3 Hz); 29,48; 29,63; 29,76; 29, 86; 29,97; 31,01 (d; C⁶; ²J_{C-P}=17 Hz) ; 33,53; 50, 87 (3C; C¹⁶) ; 61,74 (2C; d; C²⁺⁴; ²J_{C-P}=6,2 Hz).

### c) Silanisation d'un support en silicium par le composé (III)

Préalablement, le support en silicium, recouvert d'une couche d'oxyde thermique de 5000 Å d'épaisseur, est soumis à une hydroxylation par mise en contact avec une solution de soude 3,5 M pendant deux heures.

Une solution comprenant le composé silane décrit ci-dessus à une concentration de 10⁻² M dans du trichloroéthylène anhydre est' utilisée, et les réactions de silanisation sont effectuées à une température contrôlée de 2°C pendant 24 heures.

Le support greffé se présente sous la configuration suivante :

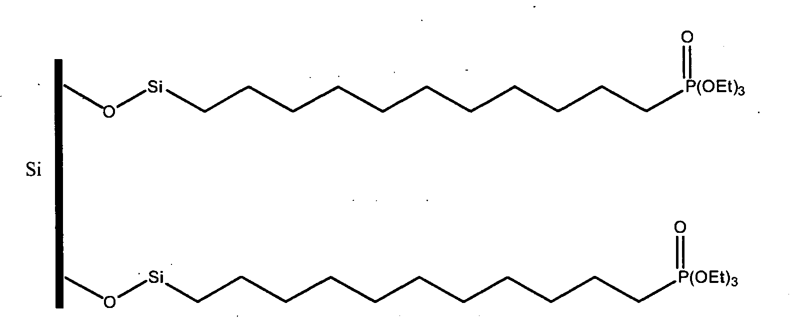

Le support greffé est ensuite mis en contact avec une solution d'iodotriméthylsilane afin de libérer la fonction acide phosphonique, qui va à son tour réagir avec une solution aqueuse de soude pour donner la fonction phosphonate souhaitée selon la schéma réactionnel suivant :

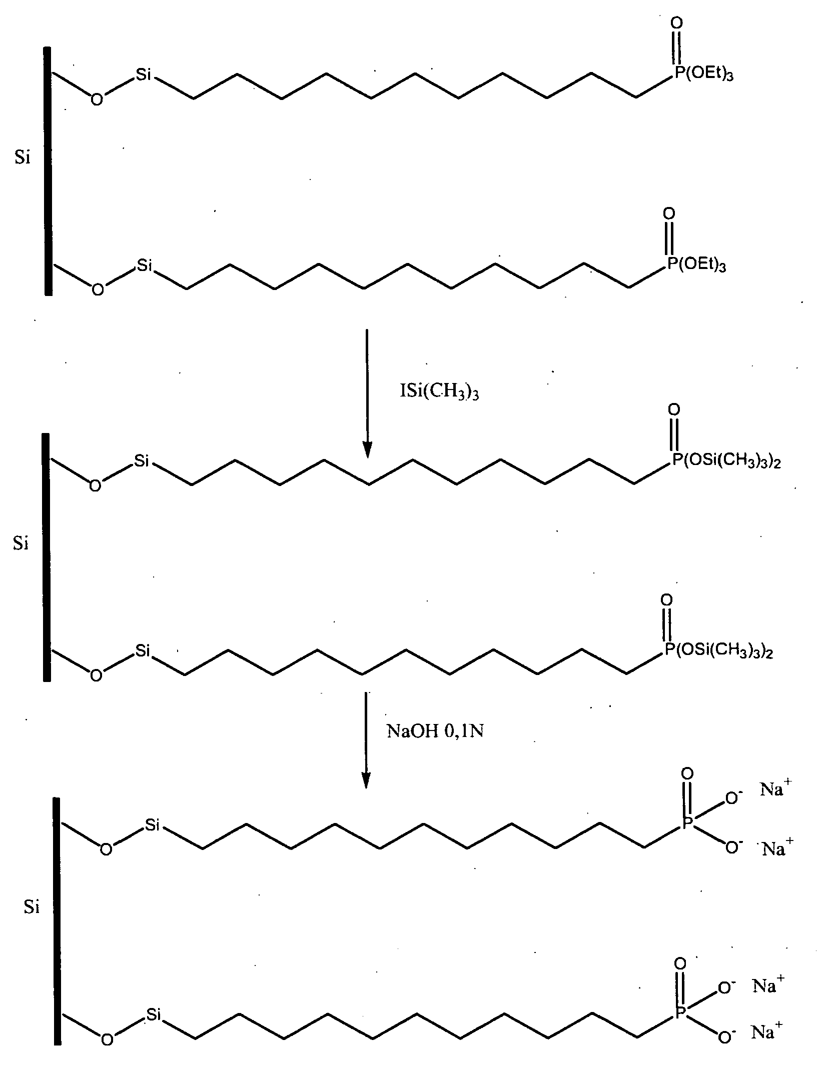

Le support ainsi chargé peut être utilisé pour adsorber de façon spécifique des protéines chargées (telles que des marqueurs protéiques) par interaction ionique.

### EXEMPLE 3

Cet exemple illustre la préparation d'un composé silane conforme à l'invention : l'ester méthylique de l'acide triméthoxysilanylundécyl-10-iminodiacétique (IV) selon le schéma réactionnel suivant :

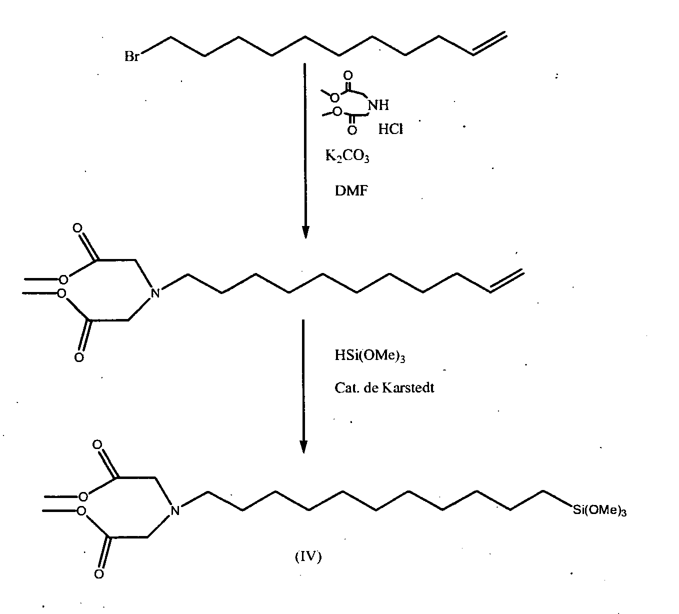

La fonction amine est incorporée par une réaction du type Williamson entre le diméthyliminodiacétate et le 11-bromoundécène en présence de carbonate de potassium.

Ensuite, l'incorporation du groupement silylé s'effectue par une réaction d'hydrosilylation en présence de catalyseur de Karstedt.

Cet exemple illustre également la silanisation d'un support en silicium par le composé silane (IV).

### a) Etape 1 : Synthèse de l'ester méthylique de l'acide undéc-1-ène-iminodiacétique

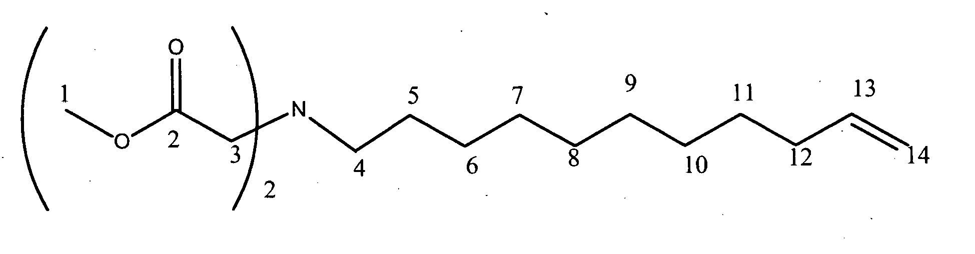

A une solution de diméthyliminodiacétate (hydrochloré) (8,53g; 43 mmol; 1 éq) dissous dans 250 mL de DMF, sont additionnés de la triéthylamine (4,35g; 6 mL; 43 mmol; 1 éq), du 11-bromundécène (95%) (10,53g; 9,9mL; 43 mmol) et du carbonate de potassium (5,95g; 43 mmol; 1 éq). La réaction est chauffée à 80°C durant 36 heures. Après évaporation du DMF et reprise à l'acétate d'éthyle, le mélange réactionnel est lavé successivement avec de l'eau permutée (à double reprise) et avec une solution saturée de chlorure de sodium, séché sur du sulfate de magnésium anhydre. Le résidu est purifié par chromatographie sur gel de silice (cyclohexane/acétate d'éthyle (75/25)) pour donner un liquide incolore.

Les caractéristiques du produit obtenu sont les suivantes :
Masse obtenue : 6 g
Rendement : 84 %
**RMN ¹H (200 MHz; CDCl₃)** : 1,28 (12H; m; H⁶⁻¹²) ; 1,59 (2H; m; H⁵) ; 2,03 (2H; m; H¹²) ; 3,74 (6H; s; H1) ; 4,09 (4H; t; H³⁺⁴; ³J_{H-H}=6,8 Hz) ; 4,16 (2H; s; H³) ; 4,97 (2H; m; H¹⁴); 5,81 (1H; m; H¹⁶)
**RMN ¹³C (200 MHz; CDCl₃)** : 26,14; 29,20; 29,29; 29, 48; 29,59; 29,77; 29,84; 34,18; 49,51 (C³) ; 52,54 (C¹) ; 66,89 (C⁴); 114, 52 (C¹⁴); 139,57 (C¹³) ; 170,40 (C²).

### b) Etape 2 : Synthèse de l'ester méthylique de l'acide triméthoxysilanylundécyl-10-iminodiacétique

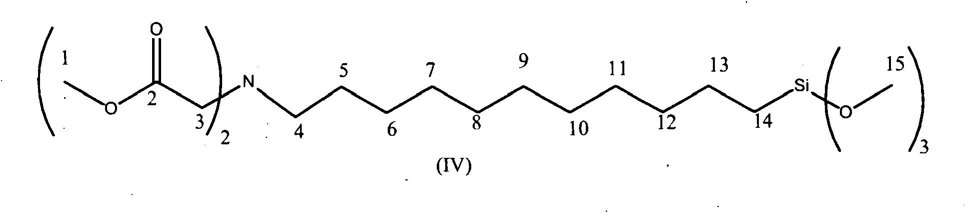

L'ester méthylique de l'acide undéc-1-ène-iminodiacétique (6g; 19 mmol) est mélangé avec du triméthoxysilane (90%) (3,57g; 3,7 mL; 26 mmol; 1,4 éq.). Le catalyseur de Karstedt (0,05g; 0,05 mmol; 0,0025 éq.) est additionné très lentement. La réaction se déroule à température ambiante durant 16 heures. Le brut réactionnel est purifié par distillation pour donner un liquide incolore.

Les caractéristiques du produit obtenu sont les suivantes :
Masse obtenue : 3,83 g
Point d'ébullition : 185-190°C à 0,5 mbar
Rendement : 46%
**RMN ¹H (200 MHz; CDCl₃)** : 0,65 (2H; m; H¹⁴) ; 1,26 (16H; m; H⁶⁻¹³) ; 1,60 (2H; m; H⁵) ; 3,57 (9H; s; H¹⁵) ; 3,74 (6H; s; H¹) ; 4,09 (4H; t; H ³⁺⁴; ³J_{H-H}=6,8 Hz); 4,16 (2H; s; H³)
**RMN ¹³C (200 MHz; CDCl₃)** : 9,42 (C¹⁴); 22,95; 26, 12; 29,18; 29, 54; 29,61; 29,88 (2C)²; 29,92; 33,49; 49,49 (C³) ; 50,83 (3C; C¹⁵) ; 52,50 (C¹) ; 66,86 (C⁴); 170,29 (C²) ;
**RMN Si (200 MHz; CDCl₃)** : -41,27 (s)

### c) Silanisation d'un support en silicium par le composé (IV)

Préalablement, le support en silicium, recouvert d'une couche d'oxyde thermique de 5000 Å d'épaisseur, est soumis à une hydroxylation par mise en contact avec une solution de soude 3,5 M pendant deux heures.

Une solution comprenant le composé silane préparé précédemment à une concentration de 10⁻²M dans du trichloroéthylène anhydre est utilisée, et les réactions de silanisation sont effectuées à une température contrôlée de 2°C pendant 24 heures.

Le support greffé se présente sous la configuration suivante :

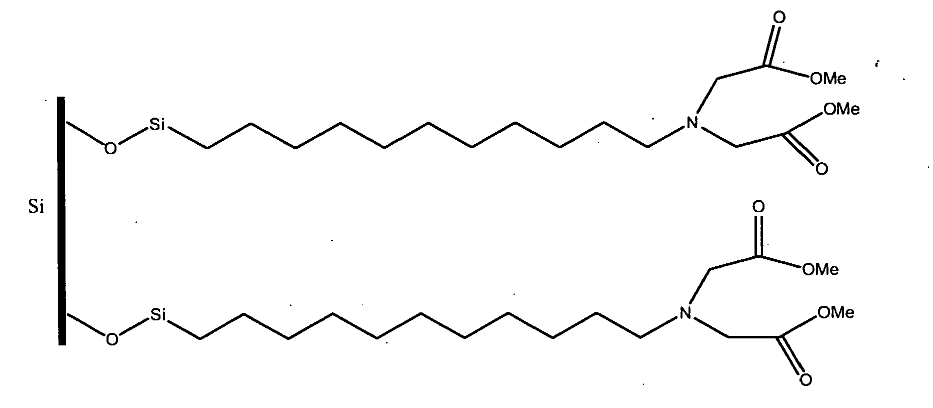

La fonction acide iminodiacétique est ensuite libérée par réaction du support modifié avec HCl 12N puis le support ainsi traité est mis à réagir avec une solution aqueuse de sulfate de cuivre pour permettre la complexation de cuivre selon le schéma réactionnel suivant :

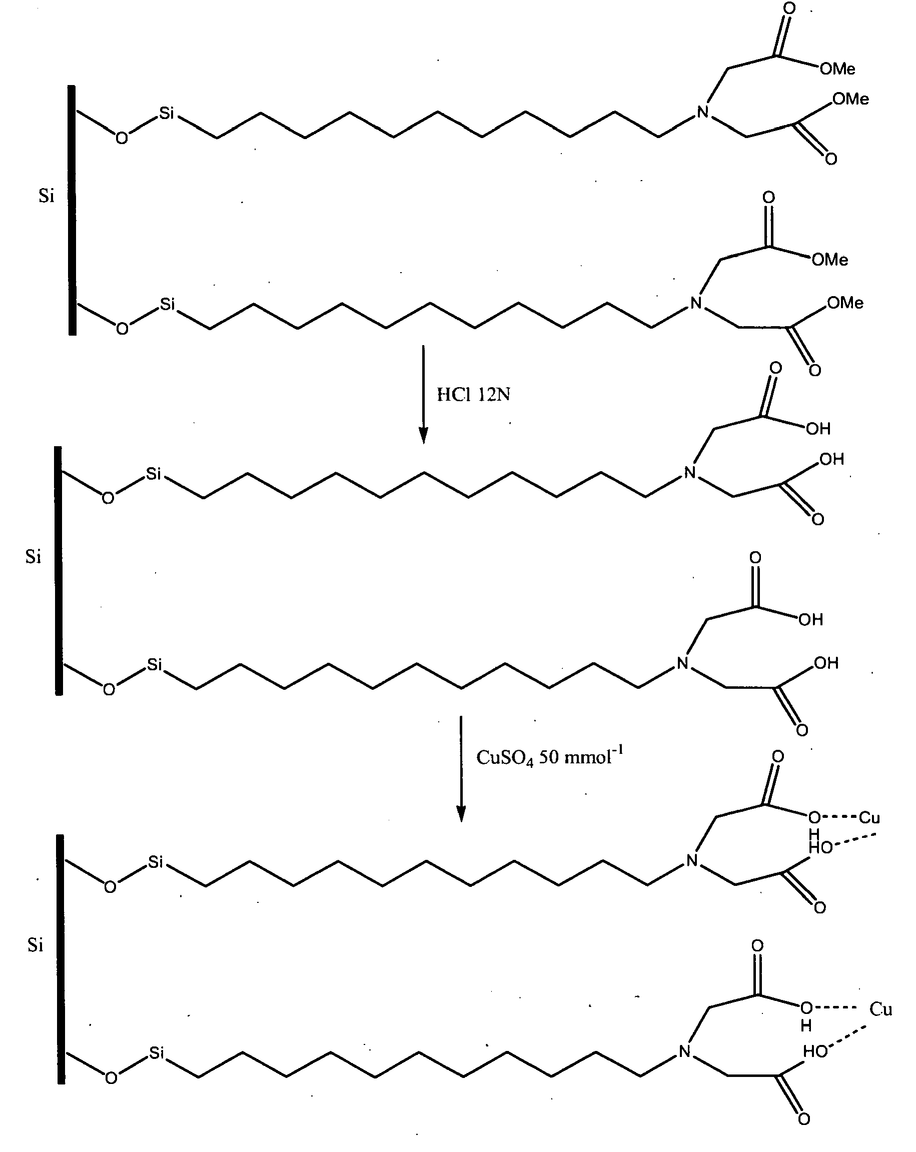

Un tel complexe peut être avantageusement utilisé pour assurer la rétention d'une protéine comprenant une séquence dite « Histidine-Tag ». L'histidine-Tag est une séquence correspondant à un enchaînement consécutif de 5 à 6 histidines placée en position C ou N terminale d'une protéine et comprenant une fonction imidazole dans sa chaîne latérale. Cette fonction est apte à se chélater avec le site de coordination libre d'un ion métallique lui-même chélaté à un groupement acide iminodiacétique ou acide nitrilodiacétique (en l'occurrence dans notre cas, l'ion métallique est Cu²⁺) . Des ions métalliques également envisageables peuvent être Ni²⁺, Zn²⁺, Co²⁺. Les composés silanes greffés décrits ci-dessus peuvent donc être utilisés pour l'isolement et la purification de protéines portant la séquence Histidine-Tag.

### EXEMPLE 4

Cet exemple illustre la préparation d'un composé silane conforme à l'invention : le 4-nitrophénylundécyltriméthoxysilane ester (V) selon le schéma réactionnel suivant :

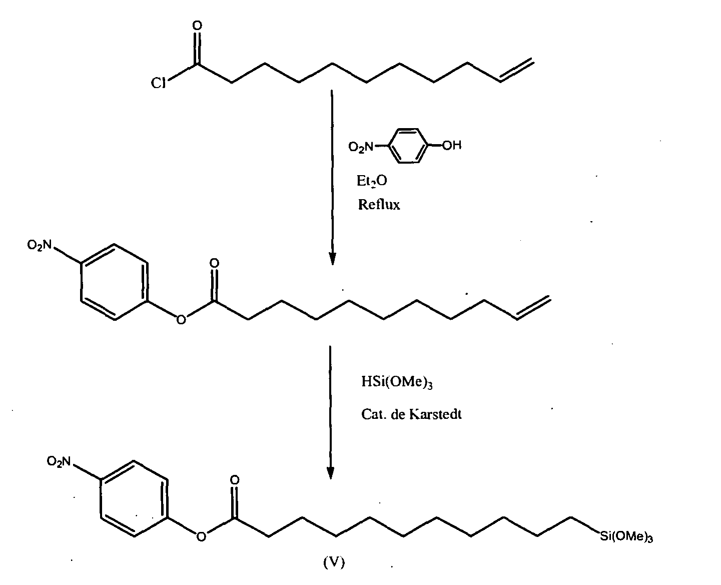

La fonction ester est synthétisée par réaction entre le chlorure d'undécénoyle et le 4-nitrophénol.

Ensuite, l'incorporation du groupement silylé s'effectue par une réaction d'hydrosilylation en présence de catalyseur de Karstedt.

### a) Etape 1 : Synthèse du 4-nitrophénylundéc-1-ène ester

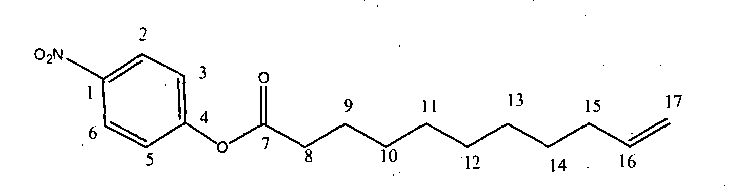

A une solution de 4-nitrophénol (3,25g; 23 mmol; 1 éq.) dissous dans 50 mL d'éther anhydre, est additionné de la pyridine (1,85g; 1,9 mL; 23 mmol; 1 éq.). la solution est chauffée à reflux de l'éther et le chlorure d'undécénoyle (97%) (4,9g; 5,2 mL; 23 mmol; 1 éq.) est ajouté très lentement (sur une période d'environ 1 heure). La réaction se poursuit à reflux de l'éther durant 1 heure. Le mélange réactionnel est filtré puis le filtrat est concentré pour donner un liquide jaunâtre.

Les caractéristiques du produit obtenu sont les suivantes :
Masse obtenue : 7,1 g
Rendement : 100%
**RMN ¹H (200 MHz; CDCl₃)** : 1,33 (10H; m; H¹⁰⁻¹⁴); 1,74 (2H; m; H⁹) ; 2,04 (2H; m; H¹⁵); 2,60 (2H; t; H⁸) ; ³J_{H-H}=7, 5 Hz); 4, 98 (2H; m; H¹⁷) ; 5, 80 (1H; m ; H¹⁶) ; 7,27 (2H; d; H³⁺⁵; ³J_{H-H}= 9,2 Hz) ; 8,27 (2H; d; H²⁺⁶; ³J_{H-H}=9,2 Hz)
**RMN ¹³C (200 MHz; CDCl₃)** : 25,13; 29,28; 29,43 (2C); 29,56; 29,66; 34,17; 34,73; 114,61 (C¹⁷); 122,84 (2C; C³⁺⁵); 125,59 (2C; C²⁺⁶) ; 139, 52 (C¹⁶) ; 145,66 (C¹) ; 155,96 (C⁴); 171, 73 (C⁷).

### b) Etape 2 Synthèse du 4-Nitrophénylundécyltriméthoxysilane ester (V)

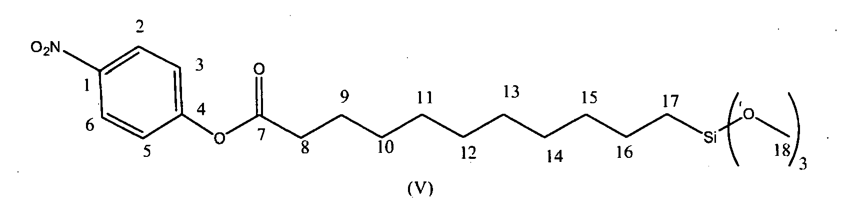

Le 4-Nitrophénylundéc-1-ène ester (7,54g; 25 mmol) est mélangé avec du triméthoxysilane (90%) (4,25g; 4,5 mL; 31 mmol; 1,3 éq.). Le catalyseur de Karstedt (0,06g; 0,06 mmol; 0,0025 éq.) est additionné très lentement et l'ensemble est chauffé à 140°C sous argon durant 24 heures. Le brut réactionnel est purifié par distillation pour donner un liquide jaunâtre.

Les caractéristiques du produit obtenu sont les suivantes :
Masse obtenue : 5,02 g
Point d'ébullition : 170-175°C à 0,5 mbar
Rendement : 48%
**RMN ¹H (200 MHz; CDCl₃)** : 0,65 (2H; m; H¹⁷); 1,33 (10H; m; H¹⁰⁻¹⁶); 1,74 (2H; m; H⁹) ; 2,60 (2H; t; H^{8; 3}J_{H-H}=7,5 Hz); 3,57 (9H; s; H¹⁸) ; 7,28 (2H; d; H^{3+5; 3}J_{H-H}=9,2 Hz); 8,25 (2H; d; H²⁺⁶ ; ³J_{H-H}=9,2 Hz)
**RMN ¹³C (200 MHz; CDCl₃)** 9,48 (C¹⁷); 22,95; 25; 07; 29,39; 29,57 (2C); 29,78 (2C); 33,46; 34,59; 50,78 (3C; C¹⁸); 122,82 (2C; C³⁺⁵) ; 125,47 (2C; C²⁺⁶); 145,53 (C¹) 155,91 (C⁴) ; 171, 62 (C⁷)
**RMN Si (200 MHz; CDCl₃)** : -41,22 (s)

### c) Silanisation d'un support en silicium par le composé (V)

Préalablement, le support en silicium, recouvert d'une couche d'oxyde thermique de 5000 Å d'épaisseur, est soumis à une hydroxylation par mise en contact avec une solution de soude 3,5 M pendant deux heures.

Une solution comprenant le composé silane préparé ci-dessus à une concentration de 10⁻²M dans du trichloroéthylène anhydre est utilisée, et les réactions de silanisation sont effectuées à une température contrôlée de 2°C pendant 24 heures.

### d) Immobilisation d'un oligonucléotide sur le support greffé- Hybridation et analyse

Des dépôts d'une solution d'oligonucléotides de séquence suivante :
5' TTT TTGATA AAC CCC 3'
   modifiée en 5' par une fonction amine et des dépôts d'une solution d'oligonucléotides de séquence suivante :
5' TTT TTGATA AAC CCC 3'
   non modifiée sont effectués sur le support obtenu conformément à ce qui est décrit au paragraphe c), ces dépôts étant effectués manuellement à raison de 0,2 µL. La concentration en oligonucléotides des solutions utilisées est de 10 µM dans un tampon NaCl 0,1 M.

Après un temps d'incubation de 16 heures en chambre humide, les supports sont hybridés avec une solution de cibles complémentaires de séquence suivante :
5' CAT AGA GTG GGT TTA TCC A 3'
   de concentration 0,05 µM, marqués par un groupement fluorescent Cy3.

Il est procédé à une mesure des signaux de fluorescence sur un scanner vendu sous la dénomination GenePix par la société AXON.

Les résultats montrent que les supports greffés conformément à l'invention permettent de réaliser l'immobilisation d'oligonucléotides comportant une fonction amine et d'oligonucléotides non modifiés, c'est-à-dire porteur d'une fonction -OH libre.

### EXEMPLE 5

Cet exemple illustre la préparation d'un composé silane conforme à l'invention : le pentafluorophénylundécyltriméthoxysilane ester (VI) selon le schéma réactionnel suivant :

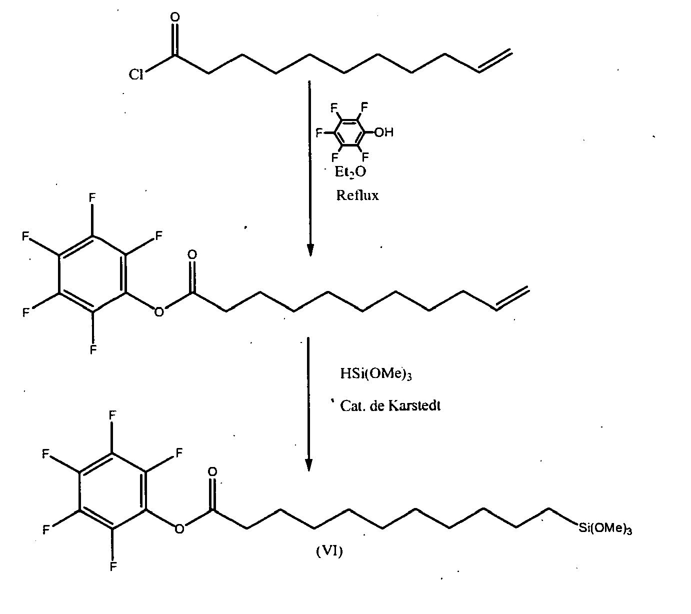

La fonction ester est synthétisée par réaction entre le chlorure d'undécénoyle et le pentafluorophénol.

Ensuite, l'incorporation du groupement silylé s'effectue par une réaction d'hydrosilylation en présence de catalyseur de Karstedt.

### a) Etape 1 Synthèse du pentafluorophénylundéc-1-ène ester

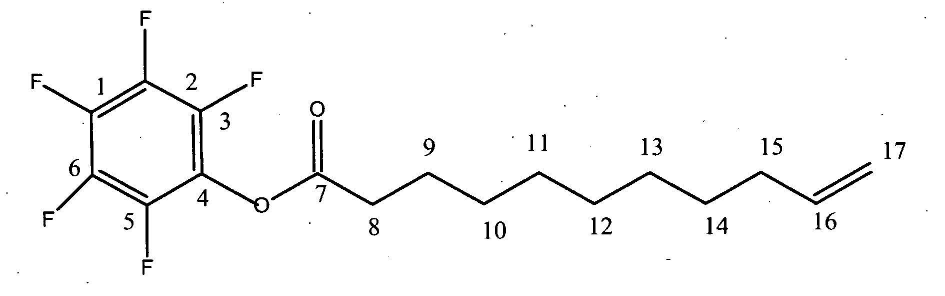

A une solution de pentafluorophénol (6,51g; 35 mmol, 1 éq.) dissous dans 60 mL d'éther anhydre, est additionné de la pyridine (2,8g; 2,9 mL; 35 mmol; 1éq.). La solution est chauffée à reflux de l'éther et le chlorure d'undécénoyle (97%) (7,4g; 7,8 mL; 35 mmol; 1 éq.) est ajouté très lentement (sur une période d'environ 1 heure). La réaction se poursuit à reflux de l'éther durant 1 heure. Le mélange réactionnel est filtré puis le filtrat est concentré pour donner un liquide incolore.

Les caractéristiques du produit obtenu sont les suivantes :
Masse obtenue : 12,36 g
Rendement : 100%
**RMN ¹H (200 MHz; CDCl₃)** : 1, 37 (10H; m; H:¹⁰⁻¹⁴); 1,80 (2H; m; H⁹) ; 2,09 (2H; m; H¹⁵); 2,70 (2H; t; H⁸ ; ³J_{H-H}=7,4 Hz); 5,01 (2H; m; H¹⁷) ; 5, 85 (1H; m; H¹⁶)
**RMN ¹³C (200 MHz; CDCl₃)** : 25,16; 29,23; 29,28; 29,42; 29,49; 29,63; 33,72; 34,18; 114, 55 (C¹⁷); 135, 78-140, 77 (2C; m; C^{3+5; 1}J_{C+F}=251 Hz) ; 137,29-142,31 (2C; m; C^{2+6; 1}J_{C-F}=253 Hz); 138,99 (C⁴) : 139,51 (C¹⁶) ; 144, 07 (C¹) ; 169,97 (C⁷)
**RMN F (400 MHz; CDCl₃)** :-153,38 (2F; d; F^{3+4; 3}J_{F-F}=17,1 Hz); -158,82 (t; F^{1; 3}J_{F-F}=21, 6 Hz; -163,02 (2F; t; F^{2+5; 3}J_{F-F}=16, 8 Hz).

### b) Etape 2 Synthèse du pentafluorophénylundécyltriméthoxysilane ester (VI)

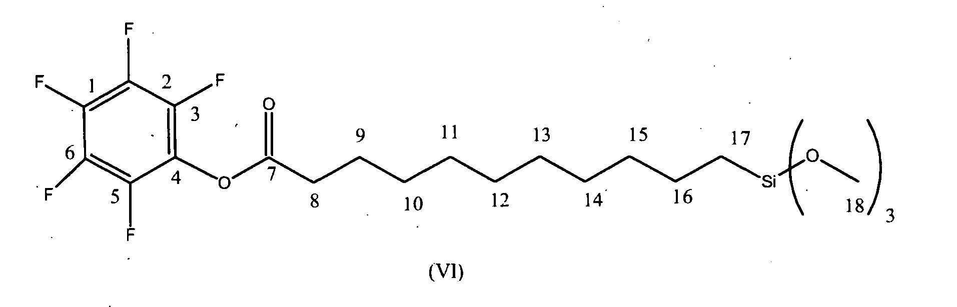

Le pentafluorophénylundéc-1-ène ester (10,86g; 31 mmol) est mélangé avec du triméthoxysilane (90%) (5,65g; 5,9 mL; 42 mmol; 1,4 éq.). Le catalyseur de Karstedt (0,07g; 0,08 mmol; 0,0025 éq.) est additionné très lentement. La réaction se déroule à température ambiante durant 16 heures. Le brut réactionnel est purifié par distillation pour donner un liquide incolore.

Les caractéristiques du produit obtenu sont les suivantes :
Masse obtenue : 10,69 g
Point d'ébullition : 135-140°C à 0,5 mbar
Rendement : 73%
**RMN ¹H (200 MHz; CDCl₃)** : 0,68 (2H; m; H¹⁷) ; 1,32 (14H; m; H¹⁰⁻¹⁶); 1,80 (2H; m; H⁹) ; 2,69 (2H; t; H^{8; 3}J_{H-H}=7, 4 Hz) ; 3,60 (9H; m; H¹⁸)
**RMN ¹³C (200 MHz; CDCl₃)** : 9,52 (C¹⁷) ; 22,99; 25,16; 29,25; 29,51; 29,60; 29,78 (2C); 33,51;. 33,75; 50,84 (3C; C¹⁸) ; 135,73-140,76 (2C; m; C^{3+5; 1}J_{C-F}= 253 Hz); 137, 27-142, 25 (2C; m; C²⁺⁶ ; ¹J_{C-F}=251 Hz); 138,98 (C⁴); 144,06 (C¹) ; 169,95 (C⁷)
**RMN F (400 MHz; CDCl₃)** : -153,31 (2F; d; F^{3+4; 3}J_{F-F}=17, 4 Hz=; -158,76 (t; F^{1; 3}J_{F-F}=21, 7 Hz) ; -162,98 (2F ; t ; F²⁺⁵; ³J_{F-F}= 16,4 Hz)
**RMN Si (200 MHz; CDCl₃)** : -41,22 (s).

### c) Silanisation d'un support en silicium par le composé (VI)

Préalablement, le support en silicium, recouvert d'une couche d'oxyde thermique de 5000 Å d'épaisseur, est soumis à une hydroxylation par mise en contact avec une solution de soude 3,5 M pendant deux heures.

Une solution comprenant le composé silane préparé ci-dessus à une concentration de 10⁻² M dans du trichloroéthylène anhydre est utilisée, et les réactions de silanisation sont effectuées à une température contrôlée de 2°C pendant 24 heures.

### e) Immobilisation d'un oligonucléotide sur le support greffé- Hybridation et analyse

Des dépôts d'une solution d'oligonucléotides de séquence suivante :
5' TTT TTGATA AAC CCC 3'
   modifiée en 5' par une fonction amine et des dépôts d'une solution d'oligonucléotides de séquence suivante :
5' TTT TTGATA AAC CCC 3'
   non modifiée sont effectués sur le support obtenu conformément à ce qui est décrit au paragraphe c), ces dépôts étant effectués soit manuellement à raison de 0,2 µL, soit à l'aide d'un robot à éjection piézoélectrique vendu sous la dénomination BCA1 par la société Perkin Elmer, à raison de 300 ρL. La concentration en oligonucléotides des solutions utilisées est de 10 µM dans un tampon NaCl 0,1 M ou un tampon Na₂HPO₄ 0,3 M + 6% glycérol + 4% de butanol.

Après un temps d'incubation de 16 heures en chambre humide ou en chambre sèche, les supports sont hybridés avec une solution de cibles complémentaires de séquence suivante :
5' CAT AGA GTG GGT TTA TCC A 3'
   de concentration 0,05 µM, marqués par un groupement fluorescent Cy3.

Il est procédé à une mesure des signaux de fluorescence sur un scanner vendu sous la dénomination GenePix par la société AXON.

Les résultats montrent que les supports greffés conformément à l'invention permettent de réaliser l'immobilisation d'oligonucléotides comportant une fonction amine et d'oligonucléotides non modifiés, c'est-à-dire porteurs d'une fonction -OH libre.

### f) Immobilisation de la streptavidine Cy3

Sur un support obtenu conformément à ce qui est décrit au paragraphe c), des dépôts d'une solution streptavidine sont effectués manuellement à raison de 0,2 µL. La concentration en protéines des solutions utilisées est de 0,001 mg/mL dans un tampon PBS (tampon phosphate salin) 0,01 M.

Après un temps d'incubation de 16 heures en chambre humide, les supports sont analysés avec un scanner vendu sous la dénomination GenePix par la société Axon.

Les résultats montrent que les supports modifiés permettent de réaliser l'immobilisation de cette protéine.

### EXEMPLE 6

Cet exemple illustre la préparation d'un composé silane conforme à l'invention : l'ester méthylique de l'acide 1-triméthoxysilanyl 10-amido-undécyl-11-iminodiacétique de formule (VII) selon le schéma réactionnel suivant :

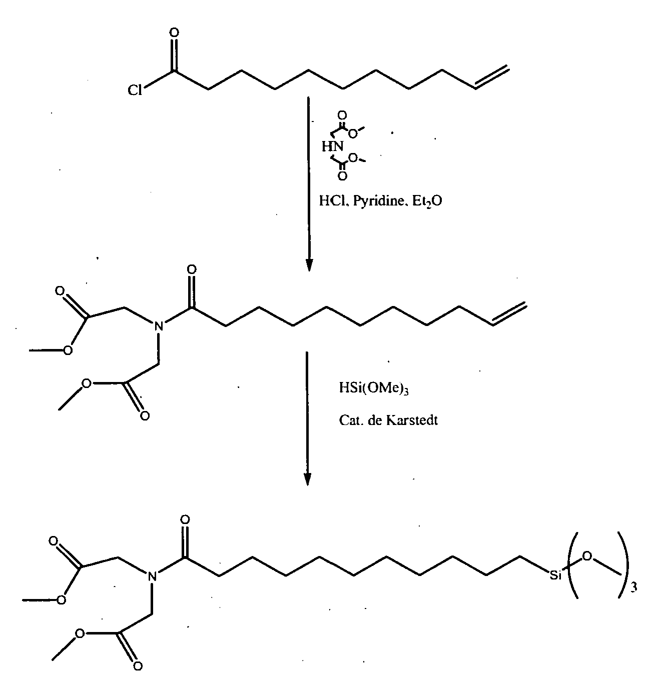

La fonction amide est synthétisée par réaction entre le chlorure d'undécénoyle et le diméthyliminodiacétate. L'incorporation du groupement silylé s'effectue par une réaction d'hydrosilylation.

### a) Etape 1 : Synthèse de l'ester méthylique de l'acide 10-amido-undéc-1-ène-iminodiacétique

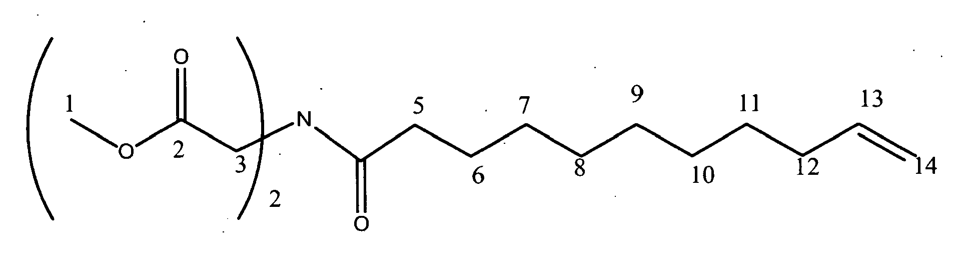

A une solution de diméthyliminodiacétate (hydrochloré) (3,08 g; 16 mmol) dissous dans 50 mL d'éther anhydre, est additionné de la pyridine (2,46 g ; 2,59 mL ; 35 mmol ; 2 éq.). La solution est chauffée à reflux de l'éther et le chlorure d'undécénoyle (97%) (3,48 g, 3,7 mL, 17 mmol, 1 éq.) est ajouté très lentement (environ sur une durée d'une heure). La réaction se poursuit à reflux de l'éther durant 1 heure. Le mélange réactionnel est filtré puis le filtrat est concentré pour donner un résidu qui est ensuite purifié par chromatographie sur gel de silice ( cyclohexane → cyclohexane/acétate d'éthyle (70/30)) pour donner un solide blanc.

Les caractéristiques du produit obtenu sont les suivantes :
Masse obtenue : 3,85 g
Rendement : 74 %
**RMN ¹H (200 MHz; CDCl₃)** : 1,30 (10H; m; H⁷⁻¹¹); 1,64 (2H; m; H⁶) ; 2,03 (2H; m; H¹²) ; 2,30 (2H; t; H⁵ ; J_{H-H}= 7,4 Hz); 3,72 (3H ; s ; H¹) ; 3, 77 (3H ; s ; H¹) ; 4,16 (2H ; s ; H³) ; 4,19 (2H ; s; H³) ; 4,96 (2H ; m ; H¹⁴); 5,81 (1H; m; H¹³)
**RMN ¹³C (200 MHz; CDCl₃)** : 25,18 (C⁶) ; 29,28 ; 29, 45 ; 29, 59 ; 29,69 ; 29,74 ; 33,06 (C⁵) ; 34, 18 (C¹²) ; 48,18 (C³) ; 50, 34 (C³) ; 52, 53 (C¹) ; 52, 90 (C¹) ; 114, 52 (C¹⁴) ; 139, 58 (C¹³) ; 169, 88 (C²) ; 170, 30 (C²) ; 174,02 (C⁴ )
**Point de fusion** : 25-30°C

### b) Etape 2 : Synthèse de l'ester méthylique de l'acide 1-triméthoxysilanyl 10-amido-undécyl-11-iminodiacétique

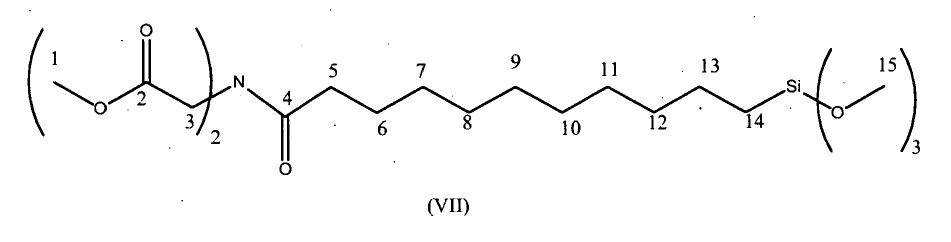

L'ester méthylique de l'acide 11-amido-undéc-1-ène-iminodiacétique (3,34 g; 10 mmol) est mélangé avec du triméthoxysilane (95%) (2,05 g; 2,1 mL; 16 mmol; 1,6 éq.). Le catalyseur de Karstedt (0,024 g; 0,025 mmol; 0,0025 éq.) est additionné très lentement. La réaction se déroule à température ambiante durant 16 heures. Le brut réactionnel est purifié par extraction au pentane pour donner un liquide visqueux jaunâtre.

Les caractéristiques du produit obtenu sont les suivantes :
Masse obtenue : 3 g
Rendement : 66%
**RMN ¹H (200 MHz; CDCl₃)** : 0,65 (2H; m; H¹⁴); 1,26 (14H; m; H⁷⁻¹³); 1,61 (2H; m; H⁶) ; 2,30 (2H; t; H⁵ ; ³J_{H-H}=7,4 Hz) ; 3,57 (9H; s; H¹⁵) ; 3,73 (3H; s; H¹) ; 3,78 (3H; s; H¹) ; 4,16 (2H ; s ; H³) ; 4,19 (2H ; s ; H³)
**RMN ¹³C (200 MHz; CDCl₃)** : 9, 52 (C¹⁴); 23,00 (C¹³) ; 25,23 (C⁶); 29,65 (2C); 29,82; 29,88; 29,90; 33,12 (C⁵) ; 33,56 (C¹²) ; 48,20 (C³) ; 50,38 (C³) ; 50,91 (C¹⁵) ; 52,57 (C¹) ; 52,93 (C¹) ; 169,90 (C²) ; 170,34 (C²) ; 174, 05 (C⁴)

### c) Silanisation d'un support en silicium par le composé (VII)

Préalablement, le support en silicium, recouvert d'une couche d'oxyde thermique de 5000 Å d'épaisseur, est soumis à une hydroxylation par mise en contact avec une solution de soude 3,5 M pendant deux heures.

Une solution comprenant le composé silane préparé précédemment à une concentration de 10⁻² M dans du trichloroéthylène anhydre est utilisée, et les réactions de silanisation sont effectuées à une température contrôlée de 2°C pendant 24 heures.

Le support greffé se présente sous la configuration suivante :

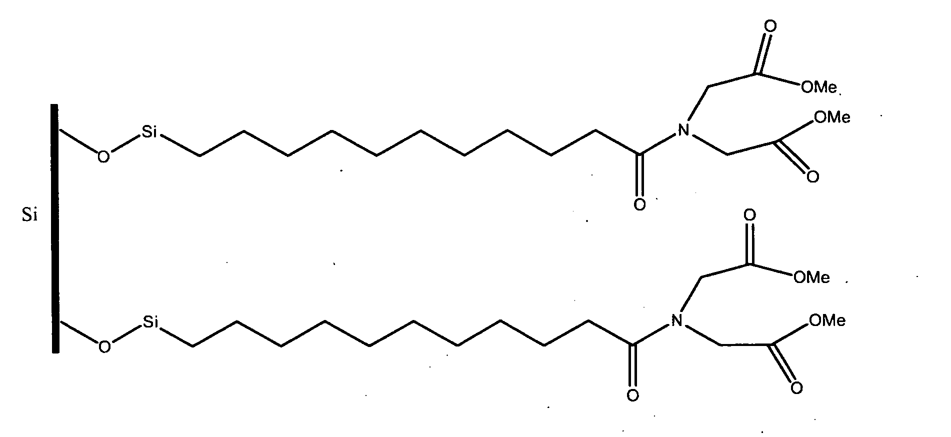

La fonction acide iminodiacétique est ensuite libérée par réaction du support modifié avec AlI₃/CH₃CN 10⁻² M puis le support ainsi traité est mis à réagir avec une solution aqueuse de sulfate de cuivre pour permettre la complexation de cuivre selon le schéma réactionnel suivant :

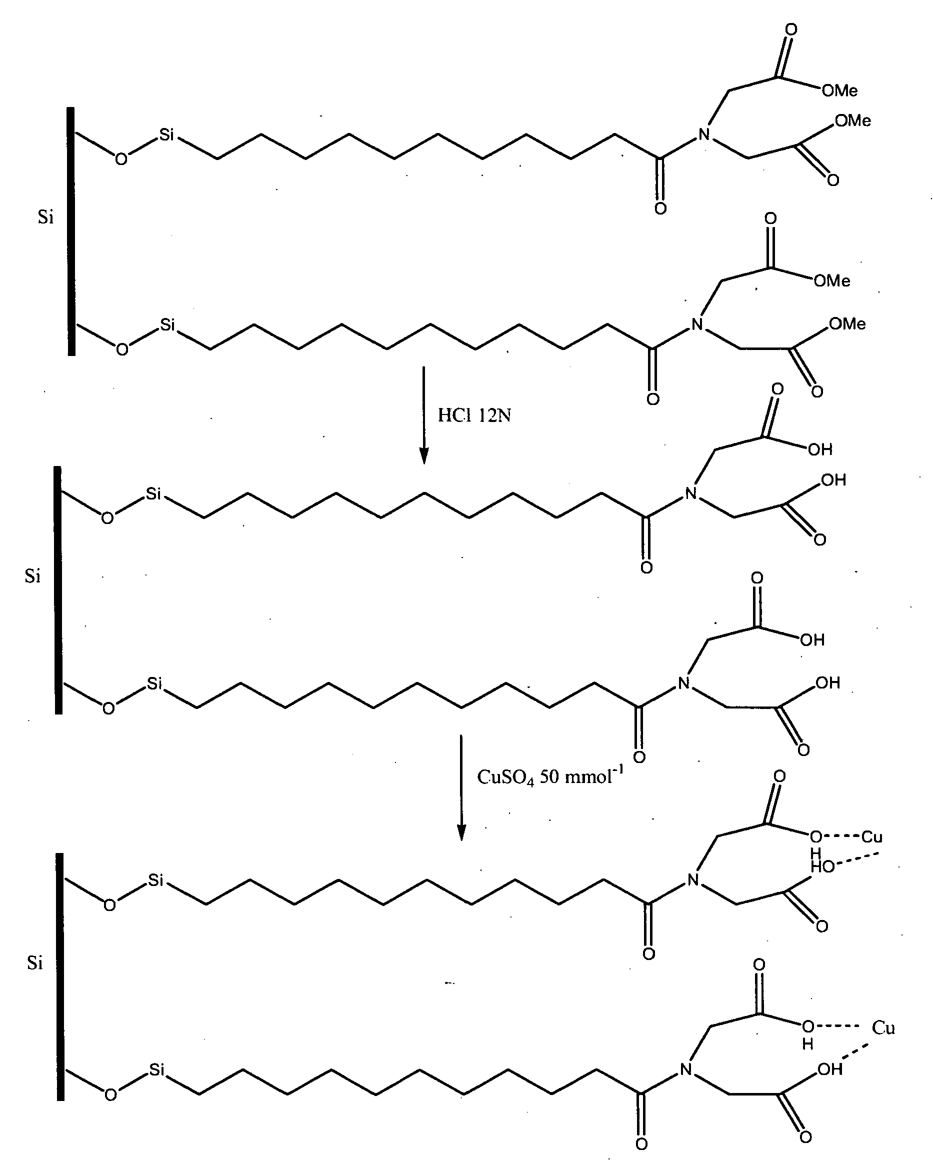

Un tel complexe peut être avantageusement utilisé pour assurer la rétention d'une protéine comprenant une séquence dite « Histidine-Tag ». L'histidine-Tag est une séquence correspondant à un enchaînement consécutif de 5 à 6 histidines placée en position C ou N terminale d'une protéine et comprenant une fonction imidazole dans sa chaîne latérale. Cette fonction est apte à se chélater avec le site de coordination libre d'un ion métallique lui-même chélaté à un groupement acide iminodiacétique (en l'occurrence dans notre cas, l'ion métallique est Cu²⁺) . Des ions métalliques également envisageables peuvent être Ni²⁺, Zn²⁺, Co²⁺.
Les composés silanes greffés décrits ci-dessus peuvent donc être utilisés pour l'isolement et la purification de protéines portant la séquence Histidine-Tag.

## Revendications

1. Composé silane répondant à l'une des formules suivantes :
A-E-X (I) 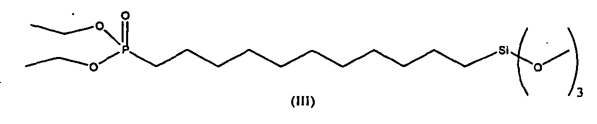
A, E et X dans la formule (I) répondant aux définitions suivantes :
- X représente un groupe silylé apte à créer une liaison covalente après réaction avec les fonctions hydroxyle ou hydrure d'un support, lequel X représente un groupe trihalogénosilane ; un groupe trihydrogénosilane ; un groupe trialcoxysilane -Si(OR)₃ avec R représentant un groupe alkyle saturé en C₁ à C₆, linéaire ou ramifié, un groupe phényle ; un groupe triaminoalcoxyamine -Si(NR¹R²)₃, avec les R¹ et R² représentant indépendamment un groupe alkyle saturé en C₁ à C₆, linéaire ou ramifié, un groupe phényle, un groupe organométallique ;
- E représente un groupe espaceur organique ;
- A représente un groupe choisi parmi les groupes de formules suivantes : 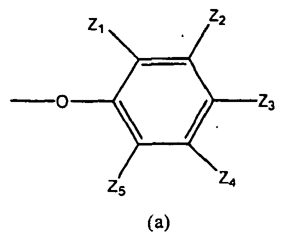 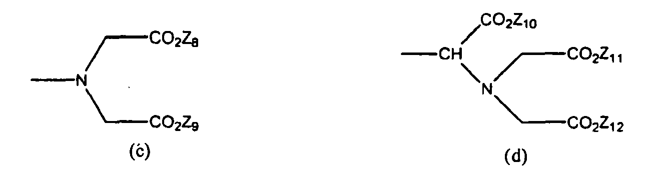 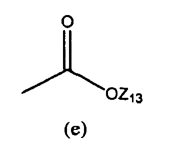
dans lesquelles :
- Z₁ à Z₅ représentent indépendamment un atome d'hydrogène ou un atome d'halogène ;
- Z₈ à Z₁₂ représentent indépendamment un groupe protecteur de la fonction acide carboxylique, un atome d'hydrogène ou un cation monovalent ;
- Z₁₃ représente un groupe imidazole, N-hydroxysuccinimide, nitrophényl, pentafluorophényl ou anhydride d'acide,
à l'exclusion du phényloxyundécyltriméthoxysilane et des composés de formules suivantes :

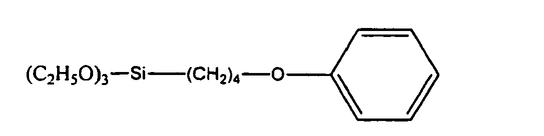

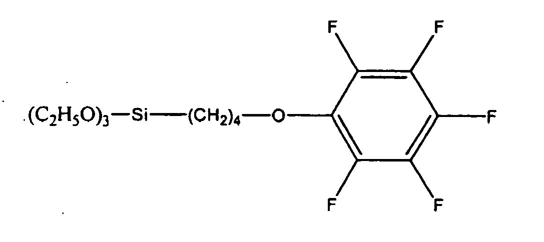

2. Composé selon la revendication 1, dans lequel E représente un groupe hydrocarboné, comprenant éventuellement une ou plusieurs insaturations et/ou un ou plusieurs groupes aromatiques et/ou un ou plusieurs hétéroatomes.

3. Composé selon la revendication 2, dans lequel le groupe hydrocarboné comprend de 2 à 24 atomes atomes de carbone.

4. Composé selon la revendication 3, dans lequel le groupe hydrocarboné est un groupe alkylène comprenant de 8 à 24 atomes de carbone.

5. Composé de formule (II) suivante :

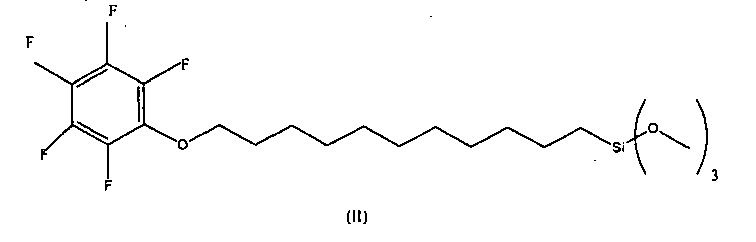

6. Composé de formule (IV) suivante :

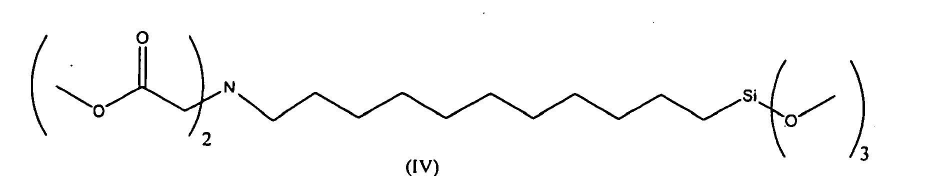

7. Composé de formule (V) suivante :

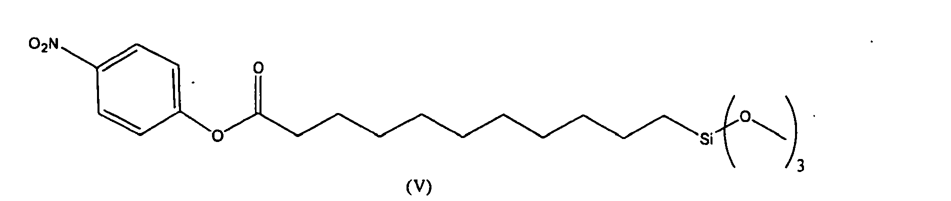

8. Composé de formule (VI) suivante :

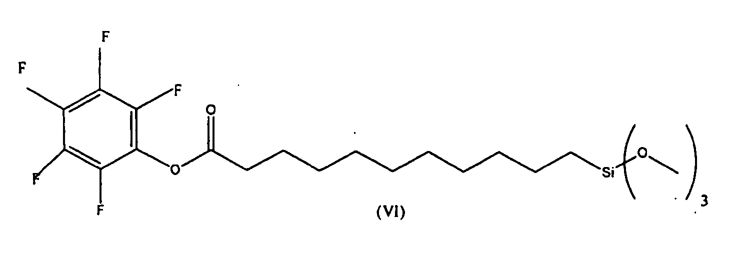

9. Composé de formule (VII) suivante :

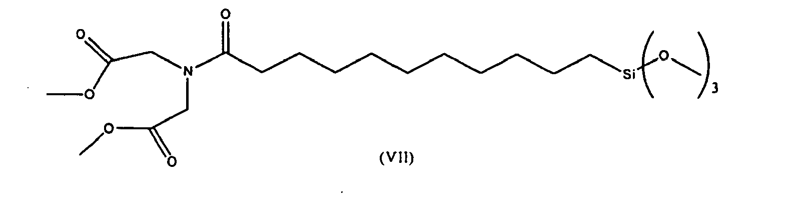

10. Procédé de fonctionnalisation d'un support solide comportant en surface des fonctions hydroxyle ou hydrure, ledit procédé comprenant une étape de mise en contact avec ledit support d'une solution comprenant au moins un composé silane répondant à l'une des formules suivantes :
A-E-X (I) 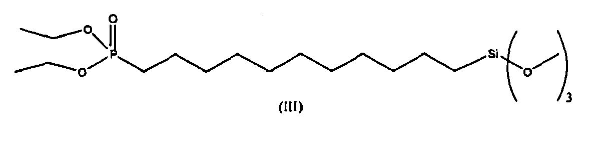
A, E et X dans la formule (I) répondant aux définitions suivantes :
- X représente un groupe silylé apte à créer une liaison covalente après réaction avec les fonctions hydroxyle ou hydrure d'un support, lequel X représente un groupe trihalogénosilane ; un groupe trihydrogénosilane ; un groupe trialcoxysilane -Si(OR)₃ avec R représentant un groupe alkyle.saturé en C₁ à C₆, linéaire ou ramifié, un groupe phényle ; un groupe triaminoalcoxyamine -Si (NR¹R²)₃, avec les R¹ et R² représentant indépendamment un groupe alkyle saturé en C₁ à C₆, linéaire ou ramifié, un groupe phényle, un groupe organométallique ;
- E représente un groupe espaceur organique ;
- A représente un groupe choisi parmi les groupes de formules suivantes : 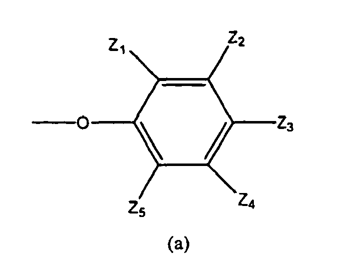 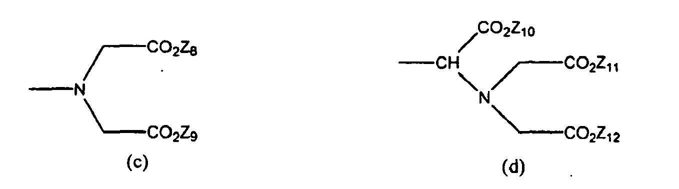 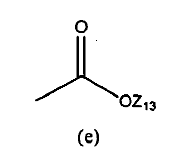
dans lesquelles :
- Z₁ à Z₅ représentent indépendamment un atome d'hydrogène ou un atome d'halogène ;
- Z₈ à Z₁₂ représentent indépendamment un groupe protecteur de la fonction acide carboxylique, un atome d'hydrogène ou un cation monovalent ;
- Z₁₃ représente un groupe imidazole, N-hydroxysuccinimide, nitrophényl, pentafluorophényl ou anhydride d'acide,
à l'exclusion du phényloxyundécyltriméthoxysilane.

11. Procédé selon la revendication 10, comprenant, avant l'étape de mise en contact, un étape de traitement de la surface du support afin de créer sur ladite surface les fonctions hydroxyles ou hydrures nécessaires au greffage.

12. Procédé selon la revendication 10 ou 11, dans lequel le support solide est un support organique ou un support inorganique.

13. Procédé selon la revendication 12, dans lequel le support inorganique est en oxyde métallique, en métal ou en silicium.

14. Support solide susceptible d'être obtenu par le procédé tel que défini selon l'une quelconque des revendications 10 à 13.

15. Procédé d'immobilisation de molécules biologiques sur un support solide comprenant successivement :
a)une étape de fonctionnalisation d'un support solide comportant en surface des fonctions hydroxyle ou hydrure, consistant en la mise en contact avec ledit support d'une solution comprenant au moins un composé silane répondant à l'une des formules suivantes :
A-E-X (I)
dans laquelle :
- X représente un groupe silylé apte à créer une liaison covalente après réaction avec les fonctions hydroxyle ou hydrure d'un support, lequel X représente un groupe trihalogénosilane ; un groupe trihydrogénosilane ; un groupe trialcoxysilane -Si(OR)₃ avec R représentant un groupe alkyle saturé en C₁ à C₆, linéaire ou ramifié, un groupe phényle ; un groupe triaminoalcoxyamine -Si (NR¹R²)₃, avec les R¹ et R² représentant indépendamment un groupe alkyle saturé en C₁ à C₆, linéaire ou ramifié, un groupe phényle, un groupe organométallique ;
- E représente un groupe espaceur organique ;
- A représente un groupe choisi parmi les groupes de formules suivantes : 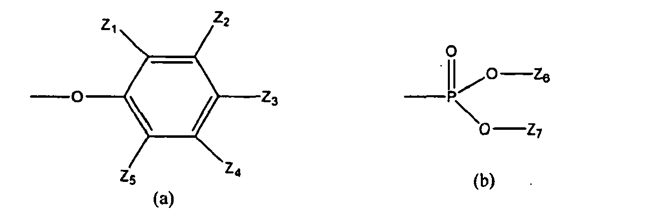 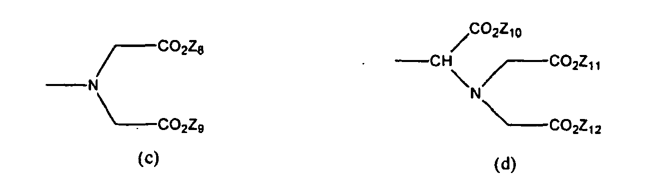 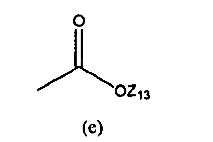
dans lesquelles :
- Z₁ à Z₅ représentent indépendamment un atome d'hydrogène ou un atome d'halogène ;
- Z₆ et Z₇ représentent un groupe protecteur de la fonction acide phosphonique, un atome d'hydrogène ou un cation monovalent ;
- Z₈ à Z₁₂ représentent indépendamment un groupe protecteur de la fonction acide carboxylique, un atome d'hydrogène ou un cation monovalent ;
- Z₁₃ représente un groupe imidazole, N-hydroxysuccinimide, nitrophényl, pentafluorophényl, anhydride d'acide,
à l'exclusion du phényloxyundécyltriméthoxysilane ;
b) une étape de mise en contact du support obtenu à l'étape a) avec une solution comprenant la (les) molécule(s) biologique(s) à immobiliser.

16. Procédé d'immobilisation selon la revendication 15, dans lequel la molécule biologique à immobiliser est choisie parmi les acides nucléiques, les polypeptides, les lipides, les carbohydrates ou les hormones.

17. Procédé d'immobilisation selon la revendication 15 ou 16, comprenant, en outre, entre l'étape a) et b), pour les composés comportant des groupes A de formules (b), (c) et (d) tels que définis à la revendication 16, une étape de déprotection afin de libérer les fonctions acide phosphonique ou acide carboxylique et pour ceux comportant un groupe A de formule (c) ou (d), une étape subséquente de complexation avec un élément métallique.

18. Support solide susceptible d'être obtenu par un procédé tel que défini selon l'une quelconque des revendications 15 à 17.

19. Support solide selon la revendication 18, dans lequel les molécules biologiques immobilisées sont des acides nucléiques ou des polypeptides et qu'il constitue une puce à acides nucléiques ou à polypeptides.

## Claims

1. Silane compound corresponding to one of the following formulae:
A-E-X (I) 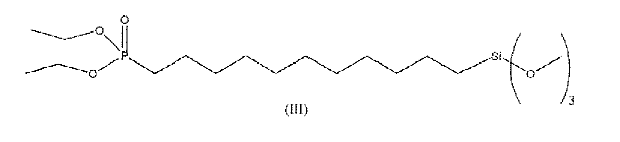
A, E and X in the formula (I) corresponding to the following definitions:
- X represents a silyl group capable of creating a covalent bond after reaction with the hydroxyl or hydride functional groups of a support, said X representing a trihalosilane group; a trihydrosilane group; a trialkoxysilane group -Si(OR)₃ with R representing a linear or branched C₁ to C₆ saturated alkyl group or a phenyl group; a triaminoalkoxyamine group -Si(NR¹R²)₃, with R¹ and R² independently representing a linear or branched C₁ to C₆ saturated alkyl group or a phenyl group; or an organometallic group;
- E represents an organic spacer group; and
- A represents a group chosen from the groups of formulae below: 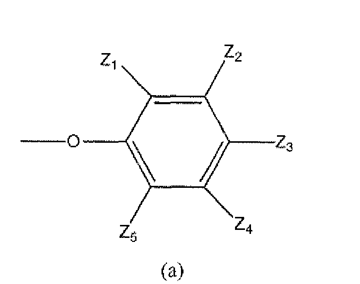 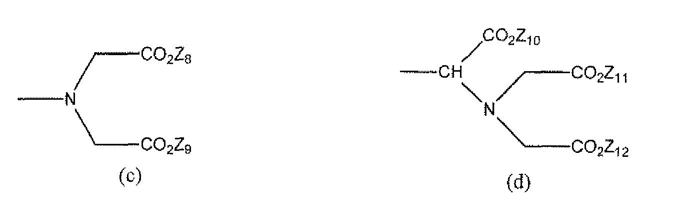 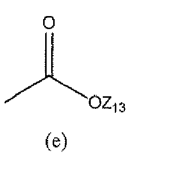
in which:
- Z₁ to Z₅ independently represent a hydrogen atom or a halogen atom;
- Z₈ to Z₁₂ independently represent a group for protecting the carboxylic acid functional group, a hydrogen atom or a monovalent cation; and
- Z₁₃ represents an imidazole, N-hydroxysuccinimide, nitrophenyl, pentafluorophenyl or acid anhydride group, with the exclusion of phenyloxyundecyl-trimethoxysilane and compounds of the following formulae:

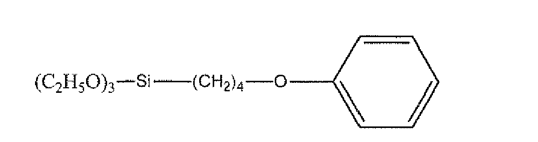

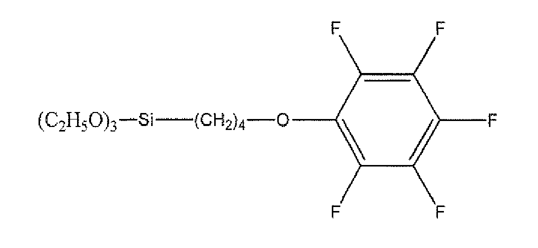

2. Compound according to Claim 1, in which E represents a hydrocarbon-based group optionally comprising one or more unsaturations and/or one or more aromatic groups and/or one or more heteroatoms.

3. Compound according to Claim 2, in which the hydrocarbon-based group comprises from 2 to 24 carbon atoms.

4. Compound according to Claim 3, in which the hydrocarbon-based group is an alkylene group comprising from 8 to 24 carbon atoms.

5. Compound of formula (II) below:

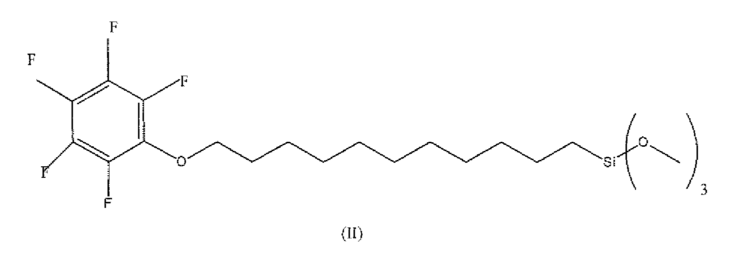

6. Compound of formula (IV) below:

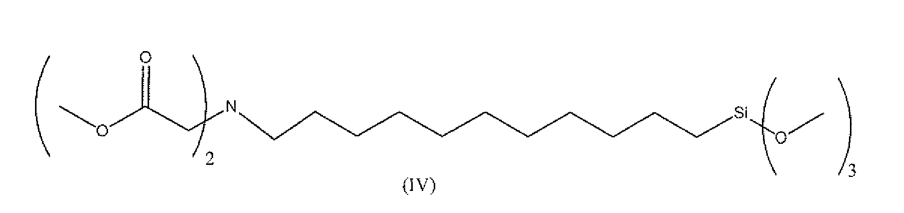

7. Compound of formula (V) below:

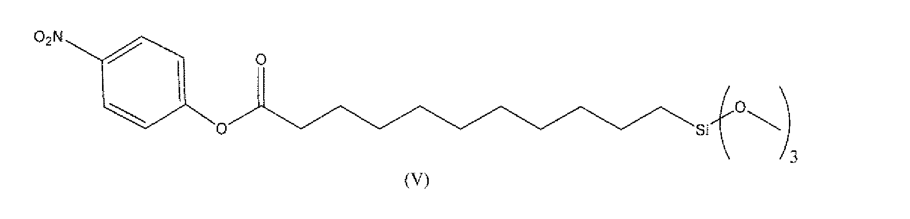

8. Compound of formula (VI) below:

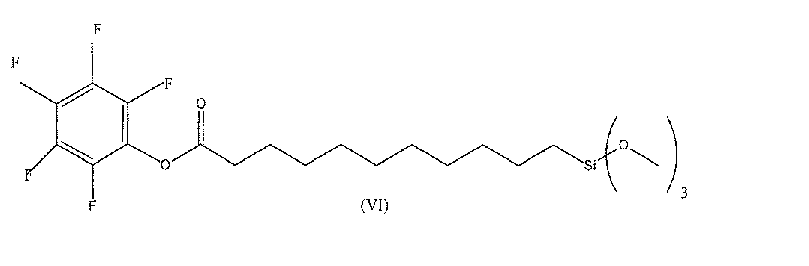

9. Compound of formula (VII) below:

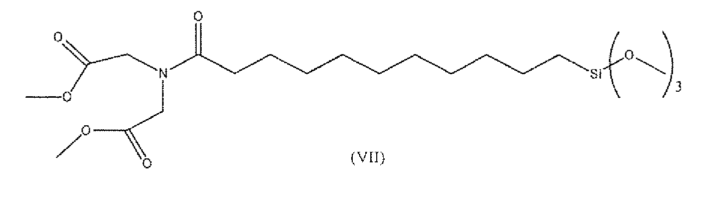

10. Process of functionalizing a solid support comprising hydroxyl or hydride functional groups at the surface, said process comprising a step of bringing into contact with said support a solution comprising at least one silane compound corresponding to one of the following formulae:
A-E-X (I) 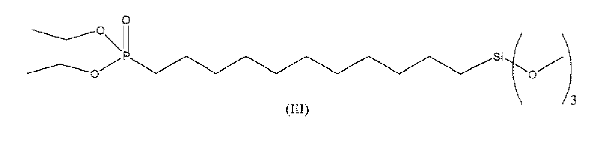
A, E and X in the formula (I) corresponding to the following definitions:
- X represents a silyl group capable of creating a covalent bond after reaction with the hydroxyl or hydride functional groups of a support, said X representing a trihalosilane group; a trihydrosilane group; a trialkoxysilane group -Si(OR)₃ with R representing a linear or branched C₁ to C₆ saturated alkyl group or a phenyl group; a triaminoalkoxyamine group -Si(NR¹R²)₃, with R¹ and R² independently representing a linear or branched C₁ to C₆ saturated alkyl group or a phenyl group; or an organometallic group;
- E represents an organic spacer group; and
- A represents a group chosen from the groups of formulae below: 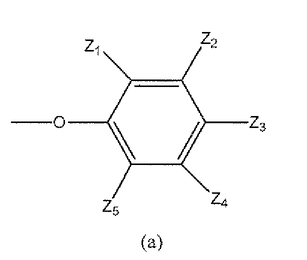 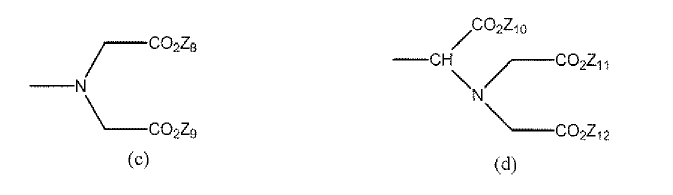 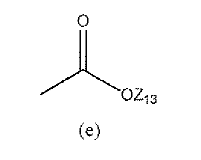
in which:
- Z₁ to Z₅ independently represent a hydrogen atom or a halogen atom;
- Z₈ to Z₁₂ independently represent a group for protecting the carboxylic acid functional group, a hydrogen atom or a monovalent cation; and
- Z₁₃ represents an imidazole, N-hydroxysuccinimide, nitrophenyl, pentafluorophenyl or acid anhydride group, with the exclusion of phenyloxyundecyl-trimethoxysilane.

11. Process according to Claim 10, comprising, before the contacting step, a step of treating the surface of the support in order to create on said surface the hydroxyl or hydride functional groups necessary for the grafting.

12. Process according to Claim 10 or 11, in which the solid support is an organic support or an inorganic support.

13. Process according to Claim 12, in which the inorganic support is made of a metal oxide, of metal, or of silicon.

14. Solid support capable of being obtained by the process as defined according to any one of Claims 10 to 13.

15. Process of immobilizing biological molecules on a solid support successively comprising:
a) a step of functionalizing a solid support comprising hydroxyl or hydride functional groups at the surface, consisting of bringing into contact with said support a solution comprising at least one silane compound corresponding to one of the following formulae:
A-E-X (I)
in which:
- X represents a silyl group capable of creating a covalent bond after reaction with the hydroxyl or hydride functional groups of a support, said X representing a trihalosilane group; a trihydrosilane group; a trialkoxysilane group -Si(OR)₃ with R representing a linear or branched C₁ to C₆ saturated alkyl group or a phenyl group; a triaminoalkoxyamine group -Si(NR¹R²)₃, with R¹ and R² independently representing a linear or branched C₁ to C₆ saturated alkyl group or a phenyl group; or an organometallic group;
- E represents an organic spacer group;
- A represents a group chosen from the groups of formulae below: 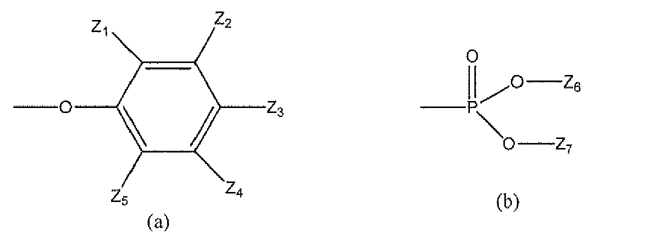 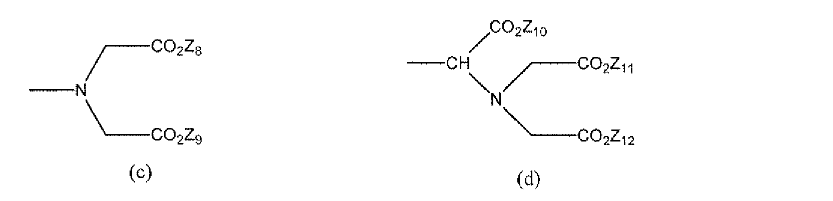 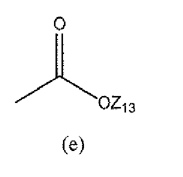
in which:
- Z₁ to Z₅ independently represent a hydrogen atom or a halogen atom;
- Z₆ and Z₇ represent a group for protecting the phosphonic acid functional group, a hydrogen atom or a monovalent cation;
- Z₈ to Z₁₂ independently represent a group for protecting the carboxylic acid functional group, a hydrogen atom or a monovalent cation; and
- Z₁₃ represents an imidazole, N-hydroxysuccinimide, nitrophenyl, pentafluorophenyl or acid anhydride group,
with the exclusion of phenyloxyundecyl-trimethoxysilane;
b) a step of bringing the support obtained in step a) into contact with a solution comprising the biological molecule(s) to be immobilized.

16. Immobilization process according to Claim 15, in which the biological molecule to be immobilized is chosen from nucleic acids, polypeptides, lipids, carbohydrates or hormones.

17. Immobilization process according to Claim 15 or 16, comprising, in addition, between step a) and b), for the compounds comprising A groups of formulae (b), (c) and (d) as defined in Claim 16, a deprotection step in order to release the phosphonic acid or carboxylic acid functional groups and for those comprising an A group of formula (c) or (d), a subsequent step of complexing with a metallic element.

18. Solid support capable of being obtained by a process as defined according to any one of Claims 15 to 17.

19. Solid support according to Claim 18, in which the immobilized biological molecules are nucleic acids or polypeptides and in that it constitutes a nucleic acid or polypeptide chip.

## Patentansprüche

1. Silanverbindung gemäß einer der folgenden Formeln: 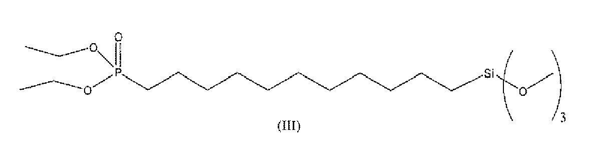 wobei A, E, und X in Formel (I) den folgenden Definitionen entsprechen:
- X stellt eine silylierte Gruppe dar, die nach Reaktion mit den Hydroxyl- oder Hydridfunktionen eines Trägers eine kovalente Bindung zu bilden vermag, wobei X darstellt: eine Trihalogensilan-Gruppe; eine Trihydrogensilan - Gruppe; eine Tri-Alkoxy-Silan Gruppe - S i (OR)₃ mit R als einer linearen oder verzweigten gesättigten Alkylgruppe mit C₁ bis C₆ oder einer Phenylgruppe; eine Triamino-Alkoxyamin - Gruppe -Si (NR¹R²)₃, mit R¹ und R² als unabhängig voneinander einer linearen oder verzweigten gessättigten Alkylgruppe, einer Phenylgruppe, einer organometall-Gruppe;
- E stellt eine organische Abstandshalter-Gruppe dar;
- A stellt eine aus der Gruppe gemäß den folgenden Formeln ausgewählte Gruppe dar: 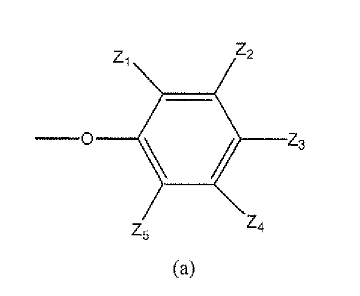 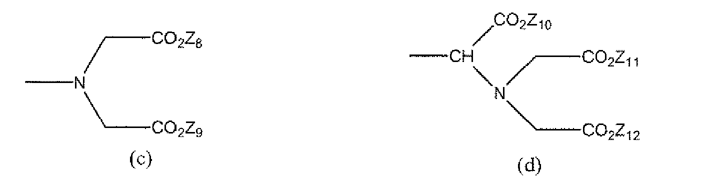 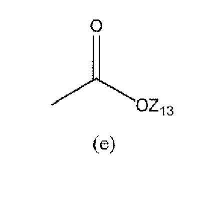
worin darstellen:
- Z₁ bis Z₅ unanhängig voneinander ein Wasserstoff - oder ein Halogenatom;
- Z₈ bis Z₁₂ unabhängig von einander eine schützende Gruppe der Karboxylsäure-Funktion, ein Wasserstoffatom oder ein einwertiges Kation;
- Z₁₃ eine Imidazol-, eine N-hydroxysuccinimid-, eine Nitrophenyl-, eine Pentafluorphenyl-, oder eine Säureanhydrid-Gruppe,
- unter Ausschluß des Phenyloxyundecyltrimethoxysilans und der Verbindungen der folgenden Formeln

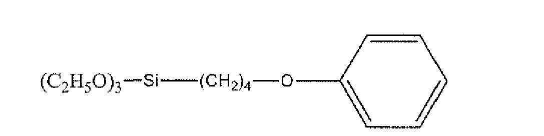

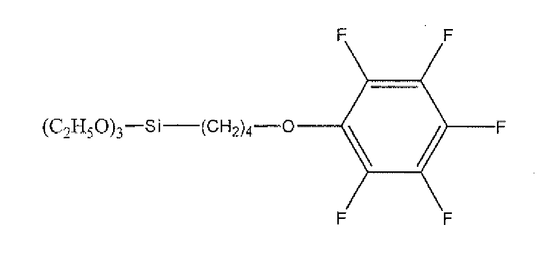

2. Verbindung nach Anspruch 1, in welcher E eine Kohlenwasserstoffhaltige Gruppe, die ggf. eine oder mehrere ungesättigte Stelle(n) enthält, und/oder eine oder mehrere aromatische Gruppe(n) und/oder ein oder mehrere Heteroatom(e) ist.

3. Verbindung nach Anspruch 2, in welcher die kohlenwasserstoffhaltige Gruppe 2 bis 24 Kohlenstoffatome aufweist.

4. Verbindung nach Anspruch 3, in welcher die kohlenwasserstoffhaltige Gruppe eine Alkylen-Gruppe mit 8 bis 24 Kohlenstoffatomen ist.

5. Verbindung gemäß der folgenden Formel (II):

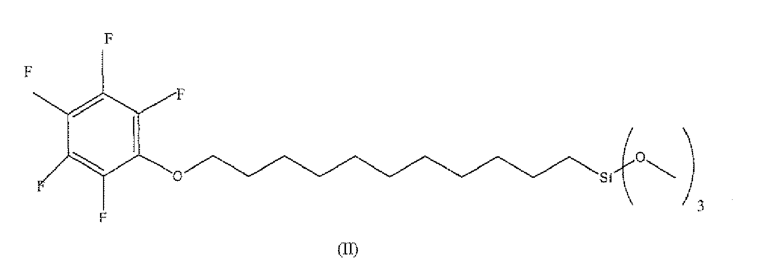

6. Verbindung gemäß der folgenden Formel (IV):

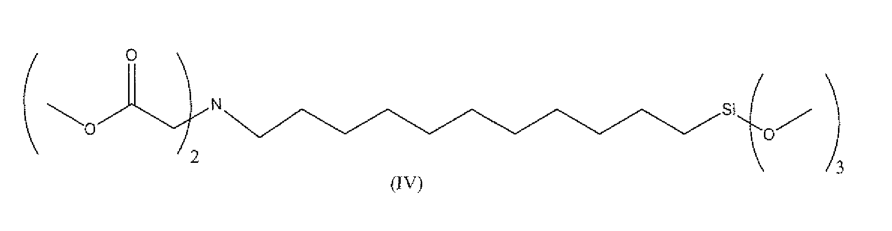

7. Verbindung gemäß der folgenden Formel (V):

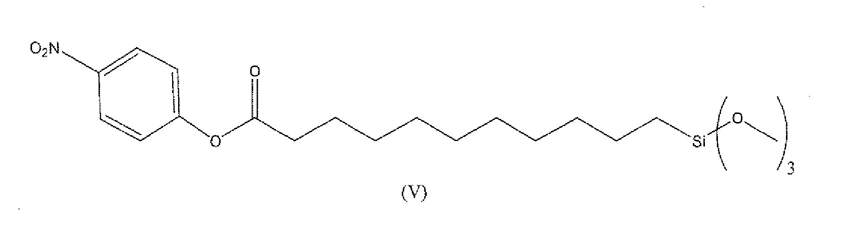

8. Verbindung gemäß der folgenden Formel (VI):

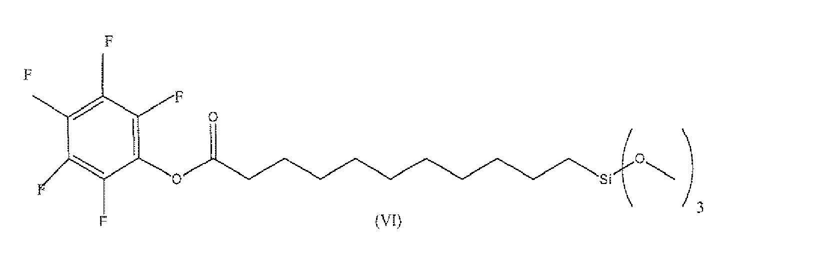

9. Verbindung gemäß der folgenden Formel (VII):

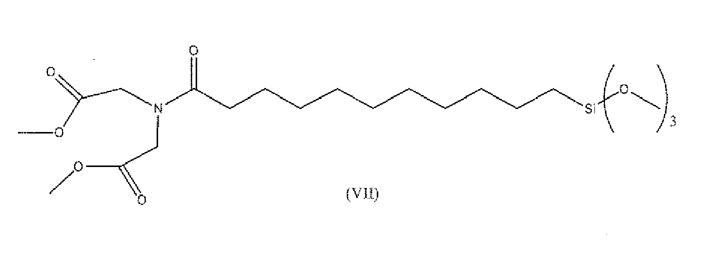

10. Verfahren zur Funktionalisierung eines festen Trägers, der an der Oberfläche Hydroxyl- oder Hydridfunktionen trägt, wobei das Verfahren eine Stufe umfaßt, in welcher der genannte Träger mit einer Lösung in Kontakt gebracht wird, die wenigstens eine Silan-Verbindung gemäß einer der folgenden Formeln enthält: 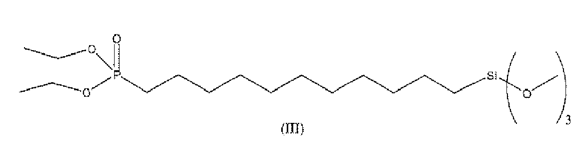 wobei A, E, und X in Formel (I) den folgenden Definitionen entsprechen:
- X stellt eine silylierte Gruppe dar, die nach Reaktion mit den Hydroxyl- oder Hydridfunktionen eines Trägers eine kovaslente Bindung zu bilden vermag, wobei X darstellt: eine Trihalogensilan-Gruppe; eine Trihydrogensilan - Gruppe; eine Tri-Alkoxy-Silan Gruppe - S i (OR)₃ mit R als einer linearen oder verzweigten gesättigten Alkylgruppe mit C₁ bis C₆ oder einer Phenylgruppe; eine Triamino-Alkoxyamin - Gruppe -Si (NR¹R²)₃, mit R¹ und R² als unabhängig voneinander einer linearen oder verzweigten gesättigten Alkylgruppe, einer Phenylgruppe, einer Organometall-Gruppe;
- E stellt eine organische Abstandshalter-Gruppe dar;
- A stellt eine aus der Gruppe gemäß den folgenden Formeln ausgewählte Gruppe dar: 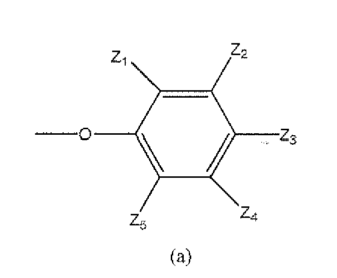 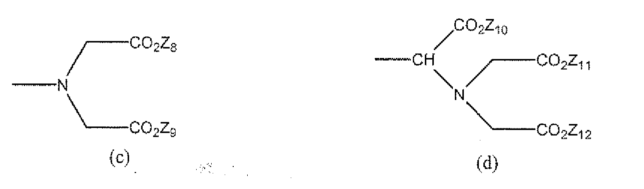 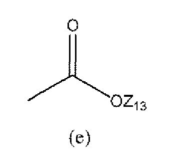
worin darstellen:
- Z₁ bis Z₅ unanhängig voneinander ein Wasserstoff- oder ein Halogenatom;
- Z₈ bis Z₁₂ unabhängig von einander eine schützende Gruppe der Karboxylsäure-Funktion, ein Wasserstoffatom oder ein einwertiges Kation;
- Z₁₃ eine Imidazol-, eine N-hydroxysuccinimid-, eine Nitrophenyl-, eine Pentafluorphenyl-, oder eine Säureanhydridgruppe,
- unter Ausschluß des Phenyloxyundecyltrimethoxysilans.

11. Verfahren nach Anspruch 10, das vor der Stufe des In-Kontakt-Bringens des Trägers mit einer Lösung eine Stufe der Behandlung der Oberfläche des Trägers umfaßt, um auf der genannten Oberfläche die für die Pfropfung erforderlichen Hydroxyl- oder Hydridfunktionen zu schaffen.

12. Verfahren nach Anspruch 10 oder Anspruch 11, bei welchem der feste Träger ein organischer oder ein anorganischer Träger ist.

13. Verfahren nach Anspruch 12, bei welchem der anorganische Träger aus Metalloxyd, aus Metall oder aus Silizium besteht.

14. Fester Träger, wie er nach dem beispielsweise in einem beliebigen der Ansprüche 10 bis 13 definierten Verfahren erhalten werden kann.

15. Verfahren zur Immobilisierung biologischer Moleküle auf einem festen Träger, wobei das Verfahren aufeinanderfolgend umfaßt:
- a) eine Stufe der Funktiomalisierung eines festen Trägers, der an der Oberfläche Hydroxyl- oder Hydridfunktionen trägt, wobei die Stufe darin besteht, daß der genannte Träger mit einer Lösung in Kontakt gebracht wird, die wenigstens eine Silan-Verbindung gemäß einer der folgenden Formeln enthält:
A -E - X (I)
mit den Bedeutungen:
- X stellt eine silylierte Gruppe dar, die nach Reaktion mit den Hydroxyl- oder Hydridfunktionen eines Trägers eine kovaslente Bindung zu bilden vermag, wobei X darstellt: eine Trihalogensilan-Gruppe; eine Trihydrogensilan - Gruppe; eine Tri-Alkoxy-Silan Gruppe -Si (OR)₃ mit R als einer linearen oder verzweigten gesättigten Alkylgruppe mit C₁ bis C₆ oder einer Phenylgruppe; eine Triamino-Alkoxyamin - Gruppe -Si (NR¹R²)₃, mit R¹ und R² als unabhängig voneinander einer linearen oder verzweigten gesättigten Alkylgruppe, einer Phenyl- gruppe, einer Organometall-Gruppe;
- E stellt eine organische Abstandshalter-Gruppe dar;
- A stellt eine aus der Gruppe gemäß den folgenden Formeln ausgewählte Gruppe dar: 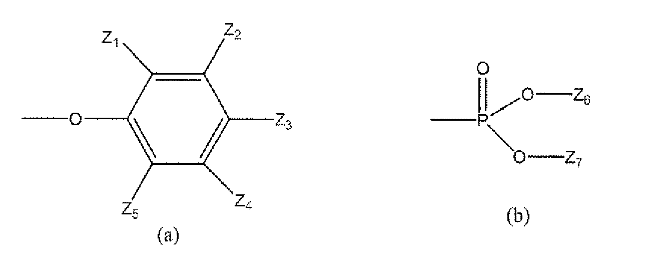 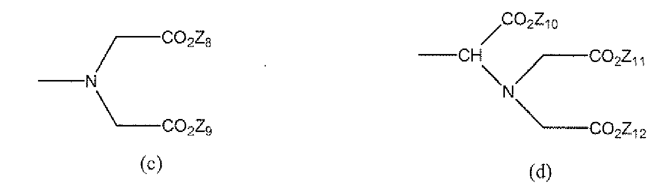 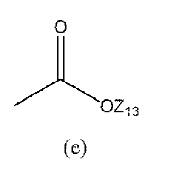 worin darstellen :
- Z₁ bis Z₅ unanhängig voneinander ein Wasserstoff - oder ein Halogenatom;
- Z₆ und Z₇ eine schützende Gruppe der Phosphonsäurefunktion, ein Wasserstoffatom oder ein einwertiges Kation
- Z₈ bis Z₁₂ unabhängig von einander eine schützende Gruppe der Karboxylsäure-Funktion, ein Wasserstoffatom oder ein einwertiges Kation
- Z₁₃ eine Imidazol-, eine N-hydroxysuccinimid-, eine Nitrophenyl-, eine Pentafluorphenyl-, oder eine Säureanhydridgruppe,
unter Ausschluß des Phenyloxyundecyltrimethoxysifans ;
- b) eine Stufe, in welcher der in der Stufe a) erhaltene Träger mit einer Lösung in Kontakt gebracht wird, welche das bzw. die zu immobilisierende(n) biologische(n) Molekül(e) enthält.

16. Immabilisierungsverfahren nach Anspruch 15, bei welchem das zu immobilisierende biologische Molekül aus Nukleinsäuren, Polypeptiden, Lipiden, Carbohydraten (Kohlenhydraten) oder Hormonen gewählt wird.

17. Immobilisierungsverfahren nanch Anspruch 15 oder Anspruch 16, das des weiteren zwischen den Stufen a) und b) für die Verbindungen, welche Gruppen A gemäß den Formeln (b), (c), und (d) wie beispielsweise in Anspruch 15 definiert enthalten, eine Entschützungsstufe umfaßt, um die Phosphonsäure -oder die Karboxylsäurefunktion freizumachen, und für die Verbindungen, welche eine Gruppe A der Formel (c) oder (d) aufweisen, eine nachfolgende Komplexbildungsstufe mit einem metallischen Element umfassen.

18. Nach einem Verfahren wie beispielsweise in einem der Ansprüche 15 bis 17 definiert erhaltener fester Träger.

19. Fester Träger nach Anspruch 18, in welchem die immobilisierten biologischen Moleküle Nukleinsäuren oder Polypeptide sind und er einen Nukleinsäure- oder Polypeptidchip bildet.
